# EUROPÄISCHE PATENTSCHRIFT

(11) **EP 2 834 029 B1**
(45) Veröffentlichungstag und Bekanntmachung des Hinweises auf die Patenterteilung: **20.09.2017**
(21) Anmeldenummer: 12721691.9
(22) Anmeldetag: 03.04.2012
(51) Int. Cl.: B21K 1/30, B21K 1/76, B21J 5/02, F16D 3/41

(54) **VERFAHREN ZUR BEARBEITUNG EINES FUNKTIONSTEILS**
PROCESS FOR PROCESSING A FUNCTIONAL PART
PROCÉDÉ DE TRAITEMENT D'UNE PARTIE FONCTIONNELLE

(43) Veröffentlichungstag der Anmeldung: 11.02.2015
(73) Patentinhaber: ThyssenKrupp Presta Aktiengesellschaft, 9492 Eschen (LI)
(72) Erfinder: KEPPLER-OTT, Thomas, AT-6800 Feldkirch (AT); KIRMSZE, Helmut, FL-9494 Schaan (LI)
(74) Vertreter: thyssenkrupp Intellectual Property GmbH
(86) Internationale Anmeldenummer: PCT/AT2012/000086
(87) Internationale Veröffentlichungsnummer: WO 2013/149271

(56) Entgegenhaltungen:
- WO-A1-2005/037459
- US-A- 2 760 797

## Beschreibung

Die Erfindung bezieht sich auf ein Verfahren zur Bearbeitung eines Funktionsteils, das sich in eine Längsrichtung erstreckt und eine Mantelfläche, die eine in die Längsrichtung verlaufende Längsmittelachse des Funktionsteils umgibt, und eine das Funktionsteil an einem freien Ende in axialer Richtung begrenzende Stirnfläche aufweist, wobei ein in Längsrichtung des Funktionsteils verfahrbarer Stempel an die Stirnfläche des Funktionsteils angedrückt wird, während sich das Funktionsteil zunächst zumindest über einen an sein freies Ende anschließenden Teilabschnitt seiner Längserstreckung in einem Hohlraum eines Werkzeuges befindet, welcher in radialer Richtung bezogen auf die Längsmittelachse von einer die Mantelfläche umgebenden und zumindest teilweise an der Mantelfläche anliegenden Wandoberfläche begrenzt wird.

Bei vielen Funktionsteilen, z.B. Stirnzahnrädern oder Lagerzapfen, insbesondere von Zapfenkreuzen (=Gelenkkreuzen) von Kardangelenken, besteht das generelle Problem, dass durch ein möglichst einfaches Herstellungsverfahren eine im Verhältnis zur Baugröße bezogen auf die axiale Richtung möglichst lang ausgebildete Funktionskontur erreicht werden soll. Beispielsweise bei einem Stirnzahnrad bildet die Verzahnung über einen Abschnitt der axialen Erstreckung (=Funktionsabschnitt) des Stirnzahnrades, über welchen Zähne mit der zumindest im Wesentlichen vorgesehenen Größe und Form vorhanden sind, eine solche Funktionskontur. Bei einem Lagerzapfen ist die Mantelfläche des Lagerzapfens über den Abschnitt der axialen Erstreckung (=Funktionsabschnitt) des Lagerzapfens, in welchem die Mantelfläche zumindest im Wesentlichen zylindrisch ausgebildet ist, die Funktionskontur.

Weiters soll die Funktionskontur über ihre axiale Ausdehnung eine hohe Maßgenauigkeit aufweisen, insbesondere in Hinblick auf einen über die axiale Erstreckung der Funktionskontur möglichst gleichbleibenden Abstand von der Längsmittelachse von mindestens einem kennzeichnenden Element der Funktionskontur. Lagerzapfen sollen zumindest über einen Funktionsabschnitt ihrer axialen Erstreckung eine möglichst exakt zylindrische Form aufweisen, d.h. die Mantelfläche des Lagerzapfens soll zumindest über diesen Bereich der axialen Erstreckung des Lagerzapfens möglichst genau einem Zylindermantel, insbesondere einem Mantel eines Kreiszylinders, entsprechen, um eine gute Lauffläche für Wälzkörper, insbesondere Nadeln, auszubilden. Um einen guten Zahneingriff, der auch hohe Belastungen übertragen kann, zu erreichen, soll sich bei Stirnzahnrädern der Abstand der Profilbezugslinie, das ist diejenige Linie, entlang der die Zahndicke gleich der Lückenweite ist, über die axiale Ausdehnung der Verzahnung einen möglichst konstanten Abstand von der Längsmittelachse aufweisen.

Stirnzahnräder sind auch unter dem Begriff Stirnräder oder Zylinderräder bekannt. In der Norm DIN 3960 vom März 1987 sind Stirnzahnräder beschrieben, weiche Funktionsteile der eingangs genannten Art bilden. Der Begriff "Profilbezugslinie" ist für ein Stirnzahnrad definiert, wie dies insbesondere aus der DIN 867 vom Februar 1986 aus Abschnitt 3.2 und Bild 1 hervorgeht. Wie erwähnt, bildet die Verzahnung eine Funktionskontur, die sich über einen Funktionsabschnitt des Stirnzahnrades erstreckt. Der Funktionsabschnitt kann hierbei einen Teil der axialen Erstreckung des Stirnzahnrades umfassen oder sich über die gesamte axiale Erstreckung des Stirnzahnrades ausdehnen. Im Fall eines gerade verzahnten Stirnzahnrades sollen sich die Zahnkämme parallel zur Längsmittelachse erstrecken, während sie bei schräg verzahnten Stirnzahnrädern einen Winkel ungleich Null Grad mit dieser einschließen, wobei der Abstand zur Längsmittelachse jeweils konstant sein soll.

Stirnzahnräder werden herkömmlicherweise durch Fließpressen hergestellt. Die Herstellung eines Stirnzahnrads durch Fließpressen geht beispielsweise aus der EP 0 560 010 A1 hervor. Die beiden Matrizen (=Formhälften) weisen rechtwinkelig zur Trennebene zwischen den Matrizen verlaufende, fluchtende Kanäle auf, in welche ein Rohling eingesetzt wird. Von beiden Seiten her werden Pressstempel durch die Kanäle gegen den zylindrischen Rohling gefahren, wodurch ein Materialfluss des Materials des Rohlings in radiale Aussparungen der Kanäle der Matrizen erfolgt. Der die Zähne ausbildende Materialfluss erfolgt somit quer zur Richtung, in welche die Pressstempel verfahren werden. Zapfenkreuze (=Gelenkkreuze) mit Lagerzapfen, wobei die Längsmittelachsen der Lagerzapfen in einer Ebene liegen und die Längsmittelachsen von aufeinanderfolgenden Lagerzapfen jeweils rechtwinkelig zueinander stehen, oder Tripoden, bei denen in einer Ebene drei Lagerzapfen liegen, deren Längsmittelachsen jeweils einen Winkel von 120° miteinander einschließen, werden herkömmlicherweise ebenfalls durch Fließpressen, insbesondere Querfließpressen hergestellt. Die Herstellung eines Zapfenkreuzes durch Fließpressen, insbesondere Querfiließpressen, geht beispielsweise aus der DE 2819167 A1 hervor. Die beiden Matrizen (=Formhälften) weisen wiederum rechtwinkelig zur Trennebene zwischen den Matrizen verlaufende, fluchtende Kanäle auf, welche hier zylindrisch ausgebildet sind und in welche ein Rohling eingesetzt wird. Von beiden Seiten her werden Pressstempel durch die zylindrischen Kanäle gegen den zylindrischen Rohling gefahren, wodurch ein Materialfluss des Materials des Rohlings in Aussparungen der Matrizen erfolgt, die an die zylindrischen Kanäle im Bereich der Trennebene anschließen und die Form der auszubildenden Zapfen aufweisen. Der die Zapfen ausbildende Materialfluss erfolgt somit quer zur Richtung, in welche die Pressstempel verfahren werden. Die Lagerzapfen bilden hier Funktionsteile des Zapfenkreuzes.

Bei der Herstellung von Funktionsteilen der eingangs genannten Art, welche eine Funktionskontur aufweisen, durch Fließpressen wird zumindest ein Teil der Stirnfläche und/oder ein beim Übergang von der Mantelfläche zur Stirnfläche liegender Bereich der äußeren Oberfläche des Funktionsteils bei einem freien Ende des Funktionsteils von einer Freiformfläche gebildet. D.h. beim Fließpressen läuft das Material des Funktionsteils im Bereich der Freiformfläche nicht gegen eine Wand des Presswerkzeuges, also eine Wand einer der Matrizen oder einer der Pressstempel an. Eine solche Freiformfläche bildet eine nach außen hin konvexe Erhebung des Funktionsteils, 1m Allgemeinen begrenzt der Übergang zwischen dieser Freiformfläche und der Funktionskontur den Funktionsabschnitt des Funktionsteils.

Um die die Länge des Funktionsabschnitts eines Stirnzahnrades zu verbessern, wird in der EP 0 560 010 A1 eine aufwendige Werkzeugtechnik und -bewegung vorgeschlagen. Zur Verbesserung der Maßhaltigkeit der Funktionskontur sind im Stand der Technik verschiedene Verfahren zur Nachbearbeitung des Bauteils bekannt. Hierzu kann beispielsweise eine Schleifoperation oder ein anderes zerspanendes Verfahren durchgeführt werden. Zerspanungsoperationen haben allerdings den Nachteil, dass diese zeit- und kostenintensiv sind, sodass solche Zerspanungsoperationen möglichst vermieden werden sollen. Aus der EP 0891825 B1 ist es bekannt, bei Lagerzapfen, hier insbesondere an Tripoden, zur Nachbehandlung nach dem Fließpressen eine Rolloperation durchzuführen. Bei dieser Rolloperation können, falls gewünscht, gleichzeitig um den Lagerzapfen umlaufende Nuten in die Mantelfläche des Lagerzapfens eingebracht werden.

Aus der WO 2005/037459 A1 geht ein gattungsgemäßes Umformverfahren hervor, bei welchem ein zylindrischer Rohling in die Vorrichtung eingelegt und während des Umformvorgangs mit einer von Stempeln aufgebrachten Kraft umgeformt wird. Ein den jeweiligen Stempel umgebendes Teil des Werkzeuges ist hierbei entgegen der Richtung, in welche der jeweilige Stempel eingepresst wird, bewegbar, um einen Hohlraum nach und nach freizugeben, in den hinein die Umformung erfolgt.

Aufgabe der Erfindung ist es ein Funktionsteil mit einer verbesserten Formgebung einer Funktionskontur bereitzustellen, wobei das Funktionsteil einfach herstellbar sein soll.

Erfindungsgemäß gelingt dies durch ein Verfahren zur Bearbeitung eines Funktionsteils mit den Merkmalen des Anspruchs 1. In den abhängigen Ansprüchen sind vorteilhafte Weiterbildungen der Erfindung beschrieben.

Beim erfindungsgemäßen Verfahren wird ein in Längsrichtung des Funktionsteils verfahrbarer Stempel an die Stirnfläche des Funktionsteils angedrückt, während sich das Funktionsteil zunächst zumindest über einen an sein freies Ende anschließenden Teilabschnitt seiner Längserstreckung in einem Hohlraum eines Werkzeuges befindet. Dieser Hohlraum wird in radialer Richtung bezogen auf die Längsmittelachse des Funktionsteils von einer die Mantelfläche des Funktionsteils umgebenden und zumindest teilweise an der Mantelfläche anliegenden Wandoberfläche begrenzt. In diesem Zustand wird das Werkzeug über einen Abziehweg vom Funktionsteil über das freie Ende des Funktionsteils abgezogen; während der Stempel zumindest über einen Teilweg des Abziehweges des Werkzeuges an die Stirnfläche des Funktionsteils angepresst bleibt. Hierbei wird vorn Werkzeug beim Abziehen des Werkzeuges ein Materialfluss von Material des Funktionsteils bewirkt. Durch diesen Materialfluss kann eine Verbesserung der Funktionskontur des Funktionsteils erreicht werden. So wird erreicht, dass die axiale Erstreckung der Funktionskontur vergrößert wird und/oder die Maßhaltigkeit der Funktionskontur über ihre axiale Ausdehnung verbessert wird, insbesondere in Hinblick darauf, dass der Wert einer Kenngröße der Funktionskontur über die axiale Erstreckung der Funktionskontur konstant bleibt.

Dieser Prozessschritt, der zur Verbesserung der Funktionskontur des Funktionsbauteils dient, kann als Kalibrierschritt bezeichnet werden.

Beispielsweise kann es sich beim erfindungsgemäß ausgebildeten Funktionsteil um ein Stirnzahnrad oder um einen Lagerzapfen, insbesondere eines Zapfenkreuzes handeln. Bei einem Stirnzahnrad bildet die Verzahnung über einen Abschnitt der axialen Erstreckung des Stirnzahnrades, über welchen die Profilbezugslinie der Verzahnung einen zumindest im Wesentlichen konstanten Abstand von der Längsmittelachse aufweist, die Funktionskontur. Im Wesentlichen konstant bedeutet hier, dass sich der Abstand der Profilbezugslinie von der Längsmittelachse um weniger als 3%, vorzugsweise um weniger als 1%, ändert. Bei einem Lagerzapfen bildet die Mantelfläche des Lagerzapfens über den Abschnitt der axialen Erstreckung des Lagerzapfens, über welchen die Mantelfläche zumindest im Wesentlichen zylindrisch ausgebildet ist, die Funktionskontur. Im Wesentlichen zylindrisch bedeutet hier, dass sich der Durchmesser der Mantelfläche um weniger als 3%, vorzugsweise um weniger als 1% ändert.

Der Abschnitt der axialen Erstreckung des Funktionsteils, über den die Funktionskontur vorliegt, wird in dieser Schrift als Funktionsabschnitt des Funktionsteils bezeichnet.

Für das Beispiel, dass das Funktionsteil ein Stirnzahnrad ist, kann durch das erfindungsgemäße Verfahren eine Vergrößerung der Länge des Funktionsabschnitts, also desjenigen Bereichs der axialen Erstreckung der Verzahnung, über welche diese einen im Wesentlichen konstanten Abstand der Profilbezugslinie von der Längsmittelachse aufweist, und/oder eine Verringerung der Änderung des Abstandes der Profilbezugslinie von der Längsmittelachse über die axiale Erstreckung des Funktionsabschnitts erreicht werden.

Für das Beispiel, dass das Funktionsteil ein Lagerzapfen ist, kann durch das erfindungsgemäße Verfahren eine Vergrößerung der Länge des Funktionsabschnitts, also des Bereichs der im Wesentlichen zylindrischen Ausbildung der Mantelfläche, und/oder eine Verringerung von der Abweichung der zylindrischen, insbesondere kreiszylindrischen, Form der Mantelfläche über die axiale Erstreckung des Funktionsabschnitts erreicht werden.

Über die axiale Erstreckung des Funktionsabschnitts des Lagerzapfens kann ein Zusammenwirken mit einem Lagerelement, insbesondere einem Wälzkörper, vorgesehen sein.

Der Weg, über den der Stempel an die Stirnfläche des Funktionsteils beim Abziehen des Werkzeuges angepresst bleibt, beträgt günstigerweise mindestens 70%, vorzugsweise mindestens 90%, des gesamten Abziehweges des Werkzeuges. Dieser gesamte Abziehweg verläuft von der Anfangsstellung des Werkzeuges bis zu dem Punkt, an welchem das freie Ende des Funktionsteils den Hohlraum des Werkzeuges verlässt, d.h. die axiale Überlappung zwischen der Wandoberfläche des Werkzeuges und der Mantelfläche des Funktionsteils endet. Vorteilhafterweise beträgt der Weg, über den der Stempel an die Stirnfläche des Funktionsteils angepresst bleibt, weniger als 100% des Abziehweges. Somit wird die Anpresskraft des Stempels an die Stirnfläche des Funktionsteils also spätestens kurz vor dem vollständigen Abziehen des Werkzeuges beendet.

Vorteilhafterweise kann durch den beim Abziehen des Werkzeuges bewirkten Materialfluss eine Glättung der Mantelfläche im Funktionsabschnitt erreicht werden.

Das Funktionsteil wird vorteilhafterweise in einem vor dem Abziehen des Werkzeuges über den Abziehweg durchgeführten Verfahrensschritt in einem Presswerkzeug, welches Matrizen aufweist, mittels mindestens eines Fließpressstempels fließgepresst. In einer ersten Ausführungsvariante der Erfindung wird das Funktionsteil nach dem Fließpressen aus dem Presswerkzeug herausgenommen, worauf ein Kalibrierwerkzeug, welches die den Hohlraum begrenzende Wandoberfläche aufweist, in Längsrichtung des Funktionsteils auf das Funktionsteil aufgeschoben wird. Es erfolgt dann das Anpressen des Stempels an die Stirnfläche des Funktionsteils, wobei dieser Stempel in diesem Fall ein in den Hohlraum des Kalibrierwerkzeugs ragender Nachbearbeitungsstempel ist. Der in den Hohlraum ragende Nachbearbeitungsstempel wird günstigerweise vom Kalibrierwerkzeug verschiebbar gelagert. Das Kalibrierwerkzeug ist vorzugsweise hülsenförmig ausgebildet und kann somit auch als Nachbearbeitungshülse bezeichnet werden.

In einer zweiten Ausführungsvariante der Erfindung verbleibt das fließgepresste Funktionsteil nach dem Fließpressen im Presswerkzeug. Eine der Matrizen des Presswerkzeuges oder beide Matrizen zusammen weisen dann den von der Wandoberfläche begrenzten Hohlraum auf, welcher zumindest teilweise an der Mantelfläche des Funktionsteils anliegt. Das Presswerkzeug selbst bildet somit das diesen Hohlraum aufweisende Werkzeug, welches in der Folge vom Funktionsteil abgezogen wird. Hierbei kann der Stempel, der zumindest über einen Teilweg des Abziehweges an die Stirnfläche des Funktionsteils angepresst bleibt, einer der Fließpressstempel oder ein zusätzlich zum mindestens einen Fließpressstempel vorhandener Nachbearbeitungsstempel sein, der in den Hohlraum des Presswerkzeuges ragt. Im ersteren Fall erstreckt sich das Funktionsteil in eine Längsrichtung, welche parallel zur Richtung liegt, in die der mindestens eine Fließpressstempel verfahren wird. Im zweiten Fall erstreckt sich das Funktionsteil in eine hierzu unter einem Winkel ungleich 0° stehende Längsrichtung, insbesondere in eine hierzu unter einem Winkel von 90° stehende Längsrichtung.

Entsprechend ist das Werkzeug, das zur Ausführung des Kalibrierschritts über das freie Ende des Funktionsteils abgezogen wird, in der ersten Ausführungsvariante das Kalibrierwerkzeug, während es in der zweiten Ausführungsvariante durch das Presswerkzeug dargestellt ist.

Die Kraft, mit welcher der Fließpressstempel oder der Nachbearbeitungsstempel an die Stirnfläche des Funktionsteils zumindest über einen Teilweg des Abziehweges des Werkzeuges an die Stirnfläche des Funktionsteils angepresst wird, kann konstant gehalten werden oder sich während des Abziehens des Werkzeuges ändern. Dabei ist es besonders vorteilhaft, wenn die Anpresskraft beim Abziehen des Werkzeuges fortlaufend, insbesondere gleichmäßig, reduziert wird, am besten geregelt.

In einer vorteilhaften Weitergestaltung der Erfindung wird der zuvor genannte Nachbearbeitungsstempel, der in der oben genannten ersten Ausführungsvariante in den Hohlraum des vom Presswerkzeug separaten Kalibrierwerkzeuges ragt und in der zuvor genannten zweiten Ausführungsvariante in den Hohlraum des Presswerkzeuges ragt, bevor das separate Werkzeug oder Presswerkzeug vom Funktionsteil abgezogen wird, so stark an die Stirnfläche des Funktionsteils angepresst, dass eine plastische Verformung des Funktionsteils mit einem Materialfluss von Material des Funktionsteils bewirkt wird. Diese plastische Verformung des Funktionsteils wirkt somit im Sinne einer Stauchung, d.h. die Gesamtlänge des Funktionsteils wird reduziert. Die Reduzierung der Gesamtlänge des Funktionsteils ist hierbei nur gering (insbesondere weniger als 10% der ursprünglichen Gesamtlänge des Funktionsteils) und tritt im Wesentlichen im Bereich des freien Ende des Funktionsteils auf, an welches der Stempel angepresst wird. Insbesondere kommt es in diesem Endabschnitt des Funktionsteils zu einem in radialer Richtung gerichteten Materialfluss oder zu einem Materialfluss mit einer in radialer Richtung gerichteten Komponente. Weiters kommt es in diesem Endabschnitt des Funktionsteils und/oder in einem daran unmittelbar anschließenden Abschnitt der Längserstreckung des Funktionsteils in einem radialen Bereich des Funktionsteils, welcher an die radiale Position der Mantelfläche des Funktionsteils nach innen anschließt, zu einem zum freien Ende der Funktionskontur des Funktionsteils gerichteten axialen Materialfluss oder zu einem Materialfluss mit einer in diese Richtung gerichteten Komponente. Durch diesen Materialfluss kann eine Vergrößerung der axialen Länge der Funktionskontur erreicht werden.

Bei der plastischen Verformung mit dem Nachpressstempel kann es zusätzlich zum Materialfluss im Bereich der Freiformfläche am freien Ende des Funktionsteils und im unmittelbar daran anschließenden Bereich auch zu einem gewissen Materialfluss in anderen Bereichen des Funktionsteils kommen. Ein solcher, insbesondere zumindest im Wesentlichen radialer Materialfluss kann insbesondere in solchen Bereichen der Längserstreckung des Funktionsteils bewirkt werden, in denen vor dem Anpressen des Nachbearbeitungsstempels ein Spalt zwischen der Mantelfläche des Funktionsteils und der diese umgebenden Wandoberfläche des Hohlraums vorliegt, in welchem das Funktionsteil bzw. zumindest ein an das freie Ende des Funktionsteils anschließender Abschnitt der Längserstreckung des Funktionsteils angeordnet ist, wenn der Nachbearbeitungsstempel an die Stirnfläche des Funktionsteils angepresst wird. Auf diese Weise kann auch eine Beeinflussung der insgesamten Form der Funktionskontur erreicht werden. So kann insbesondere ein Härteverzug, zu dem es beim Härteprozess nach dem Formgebungsprozess kommt, vorgehalten werden, d.h. nach dem Härten ist durch ein solches Vorhalten des Härteverzugs die Maßhaltigkeit der Funktionskontur der Mantelfläche zumindest über einen Teil des Funktionsteils besser als vor dem Härten. Ein solches Vorhalten des Härteverzugs kann in Bezug auf die Formgebung in Längsrichtung des Funktionsteils und/oder in Umfangsrichtung des Funktionsteils erfolgen. Zu Härteverzügen kann es beispielsweise durch unterschiedliche Eigenspannungsvorbelastungen in verschiedenen Bereichen des Funktionsteils kommen, welche sich im Formprozess des Funktionsteils ausbilden.

Bei einem erfindungsgemäß ausgebildeten Bauteil weist die Stirnfläche des Funktionsteils einen konkaven Bereich auf, der eine in Längsrichtung des Funktionsteils vorspringende Erhebung umgibt. Insbesondere umgibt dieser konkave Bereich die Erhebung vollständig, also ringförmig. Im Fall, dass es sich beim Bauteil um ein Stirnzahnrad handelt, kann die Stirnfläche des Stirnzahnrades insbesondere einen konkaven Bereich zwischen den jeweiligen Zahnspitzen und dem jeweiligen Zahngrund aufweisen. Dieser konkave Bereich umgibt die Längsmittelachse des Stirnzahnrades ringförmig. Dabei ist es möglich, dass der konkave Bereich der Stirnfläche des Stirnzahnrades Unterbrüche aufweist, die durch die Verzahnung, deren Zähne sich zum Zahngrund hin zumindest bis in den konkaven Bereich hinein erstrecken, bedingt sind.

Der konkave Bereich ist dabei durch eine Umformung gebildet. Bevorzugt ist der konkave Bereich durch eine freie, nicht in einer Werkzeugform gebundenen, Umformung gebildet, d.h. er ist eine Freiformfläche.
Es ist jedoch denkbar und möglich durch eine zusätzliche konvexe Formgebung des Nachbearbeitungsstempels diesen Werkstofffluss noch zu unterstützen. Allerdings sollte bevorzugt stets eine freie nicht werkzeuggebundene Umformung vorhanden bleiben, die zumindest einen Teil der konkaven Form ausbildet, d.h. zumindest ein Teil des konkaven Bereichs ist eine Freiformfläche. In jedem Fall ist der konkave Bereich nicht durch eine mechanische Bearbeitung, beispielsweise durch Drehen, Fräsen oder Schleifen, gebildet.

Mit Vorteil sind im Längsmittelschnitt gesehen zwischen der Mantelfläche und der Stirnfläche oder der Funktionskontur und der Stirnfläche sowie im Bereich der Stirnfläche zwei Abschnitte vorhanden, deren Konturen in Radien einbeschrieben werden können, wovon ein erster Radienmittelpunkt mit einem ersten Radius innerhalb des Funktionsteils und ein zweiter Radienmittelpunkt mit einem zweiten Radius außerhalb des Funktionsteils angeordnet ist. Dabei ist zu bevorzugen, wenn der Wert des ersten Radius kleiner als ein Fünftel, weiter bevorzugt kleiner als ein Zehntel, des Wertes des zweiten Radius beträgt. Darüberhinaus ist es zu bevorzugen, wenn der Wert des zweiten Radius kleiner als das vierhundertfache, besonders bevorzugt kleiner als das zweihundertfache, im Vergleich zum Wert des ersten Radius beträgt.

In einer vorteilhaften Ausbildung weist die Stirnfläche des Funktionsteils in diesem konkaven Bereich eine Vertiefung gegenüber einem Umfangsrand der Stirnfläche des Funktionsteils auf. Im Längsmittelschnitt durch den Funktionsteil gesehen, erstreckt sich das Funktionsteil im Bereich dieser Vertiefung somit weniger weit in die zum freien Ende des Funktionsteils hin gerichtete Längsrichtung als im Bereich der größten radialen Erstreckung der Stirnfläche, welche insbesondere bündig mit der größten radialen Erstreckung der Funktionskontur der Mantelfläche des Funktionsteils liegt. Vorzugsweise reicht die axiale Erstreckung der Funktionskontur der Mantelfläche zumindest in dem Bereich des Randes der Stirnfläche des Funktionsteils, welcher radial außerhalb des tiefsten Punktes der genannten Vertiefung liegt, bis zum Rand der Stirnfläche des Funktionsteils.

Durch die erfindungsgemäße Ausbildung des Funktionsteils kann somit eine Vergrößerung der axialen Erstreckung des Bereiches erreicht werden, über welchen die Mantelfläche eine zumindest im Wesentlichen maßhaltige Funktionskontur aufweist (="Funktionsabschnitt"). Weiters können günstigerweise Abweichungen von der Maßhaltigkeit verringert werden. Im Wesentlichen meint dabei, dass die auf die radiale Richtung bezogenen Formabweichungen zur vorgegebenen Form der Funktionskontur unter 0,1 mm, bevorzugt unter 0,05mm und noch mehr bevorzugt unter 0,01 mm, betragen. Der Durchmesser, in den die Mantelfläche des Funktionsteils einbeschrieben ist, liegt hierbei mit Vorzug im Bereich von 5mm bis 20mm.

Vorteilhafterweise kann durch das Aufschieben des Kalibrierwerkzeugs auf das Funktionsteil vom Werkzeug ein Materialfluss von Material des Funktionsteils bewirkt werden. Es wird also beim Aufschieben des Werkzeugs ein erster Kalibrierschritt des Funktionsteils durchgeführt. Durch diesen ersten Kalibrierschritt kann insbesondere die Formgenauigkeit der Funktionskontur des Funktionsteils verbessert werden, also Abweichungen des Querschnitts von der vorgegebenen Form können verringert werden. Durch diesen Materialfluss kommt es zu einer gewissen Reduzierung des Funktionsteils in seinem Durchmesser, zumindest bereichsweise.

Ein Kalibrieren, wie es im Sinne dieser Schrift verwendet wird, bedeutet ein mit umformtechnischen Mitteln auf Maß Bringen.

Weitere Vorteile und Einzelheiten der Erfindung werden im Folgenden anhand der beiliegenden Zeichnung erläutert. In der Zeichnung zeigen:
Fig. 1 einen Längsmittelschnitt durch einen Lagerzapfen gemäß dem Stand der Technik, der über ein Nadellager gegenüber einer Gelenkgabel drehbar gelagert ist;
Fig. 2 einen Längsmittelschnitt durch einen gemäß der Erfindung ausgebildeten Lagerzapfen, der über ein Nadellager gegenüber einer Gelenkgabel drehbar gelagert ist;
Fig. 3 eine schematische Darstellung eines Presswerkzeuges zum Fließpressen eines Zapfenkreuzes mit vier Lagerzapfen, teilweise im Schnitt, mit eingelegtem Rohling;
Fig. 4 eine Darstellung entsprechend Fig. 3, nach dem Pressvorgang;
Fig. 5 eine Ansicht des aus dem Presswerkzeug entnommenen Zapfenkreuzes;
Fig. 6 bis 9 schematische Darstellungen von Arbeitsschritten der Nachbearbeitung eines Lagerzapfens des Zapfenkreuzes, teilweise im Schnitt;
Fig. 10 eine Ansicht des Zapfenkreuzes mit den nachbearbeiteten Lagerzapfen;
Fig. 11 bis 13 schematische Darstellungen von Arbeitsschritten zur Herstellung eines Bauteils mit zwei gegenüberliegenden Lagerzapfen gemäß einer zweiten Ausführungsform der Erfindung, das Presswerkzeug teilweise im Schnitt dargestellt;
Fig. 14 einen Längsmittelschnitt durch ein Stirnzahnrad gemäß dem Stand der Technik;
Fig. 15 einen Längsmittelschnitt durch ein erfindungsgemäß ausgebildetes Stirnzahnrad gemäß einer dritten Ausführungsform der Erfindung;
Fig. 16 eine schematische Darstellung eines Presswerkzeuges zum Fließpressen eines Stirnzahnrades, teilweise im Schnitt, mit eingelegtem Rohling;
Fig. 17 eine Darstellung entsprechend Fig. 16, nach dem Pressvorgang;
Fig. 18 eine Ansicht des aus dem Presswerkzeug entnommenen Stirnzahnrades;
Fig. 19 bis 22 schematische Darstellungen von Arbeitsschritten der Nachbearbeitung eines Stirnzahnrades, teilweise im Schnitt;
Fig. 23 eine Ansicht des Stirnzahnrades nach der Nachbearbeitung;
Fig. 24 isometrische Ansicht des Stirnzahnrades entsprechend Fig. 23;
Fig. 25 Darstellung eines Ausschnitts des Stirnzahnrades entsprechend Fig. 23 im Schnitt;
Fig. 26 bis 28 schematische Darstellungen von Arbeitsschritten zur Herstellung eines Stirnzahnrades gemäß einer vierten Ausführungsform der Erfindung, das Presswerkzeug teilweise im Schnitt dargestellt;
Fig. 29 eine schematische Darstellung zur Erläuterung der Profilbezugslinie;
Fig. 30 eine schematische Darstellung zur Erläuterung des konkaven Bereiches.

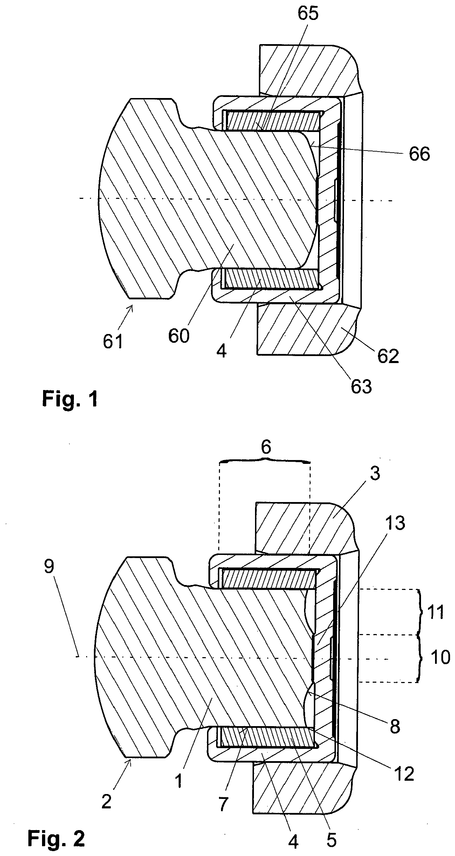

Fig. 1 zeigt ein Ausführungsbeispiel eines in herkömmlicher Weise ausgebildeten Funktionsteils 60, das ein Lagerzapfens ist, wobei das Funktionsteil Teil eines Bauteils 61 ist, welches ein Zapfenkreuz für ein Universalgelenk ist. Das Funktionsteil 60 ist gegenüber einer Gelenkgabel 62 drehbar gelagert. Hierzu ist in der Öffnung der Gelenkgabel eine Lagerhülse 63 eingesetzt und zwischen der Lagerhülse 63 und dem Funktionsteil 60 sind Nadeln 64 eingesetzt, die einerseits an der Mantelfläche 65 des Funktionsteils 60, andererseits an der Innenseite der Lagerhülse 63 abrollen, wodurch ein Nadellager ausgebildet wird. Die Mantelfläche 65 ist zumindest in dem Abschnitt ihrer axialen Erstreckung, in welchem die Nadeln 64 an ihr abrollen, im Wesentlichen zylindrisch ausgebildet.

Am freien Ende des Funktionsteils 60 geht die Mantelfläche 65 in eine Stirnfläche 66 über, die das Funktionsteil 60 in axialer Richtung begrenzt. Die Stirnfläche 66, und auch der Übergang von der Mantelfläche 65 zur Stirnfläche, ist konvex nach außen gewölbt (in axialer Richtung), wodurch eine stirnseitige Erhebung des Funktionsteils ausgebildet wird. In der gezeigten Ausführungsform ist in einem zentralen Bereich der Stirnfläche eine kleinere Vertiefung vorhanden, in welche ein axialer Vorsprung der Lagerhülse 63 eingreift, wodurch das Funktionsteil 60 in axialer Richtung abgestützt wird. Der konvex gewölbte Bereich der Stirnfläche 66, und auch des Übergangs von der Mantelfläche zur Stirnfläche, wird von einer beim Fließpressen des Bauteils 61 ausgebildeten Freiformfläche gebildet. Im Bereich der Vertiefung in der Stirnfläche 66 ist im Formhohlraum des Presswerkzeuges eine Begrenzungsfläche angeordnet, an die das Material des Zapfenkreuzes beim Fließpressen anläuft. Auch Vertiefungen in Form von Teilen von Kugelflächen werden auf diese Weise bei herkömmlichen Funktionsteil stirnseitig ausgebildet.

Ein in erfindungsgemäßer Weise ausgebildetes Funktionsteil, das ein Lagerzapfen ist, geht aus Fig. 2 hervor. Das Funktionsteil 1 kann Teil eines Bauteils 2 sein, das ein Zapfenkreuz 2 für ein Kardangelenk ist. Beispielsweise kann das Funktionsteil aber auch Teil einer Tripode oder eines anderen drehbar zu lagernden Bauteils sein. Im gezeigten Ausführungsbeispiel ist das Funktionsteil 1 drehbar gegenüber einer Gelenkgabel 3 gelagert. In einer Öffnung der Gelenkgabel 3 ist hierzu eine Lagerhülse 4 angeordnet, wobei zwischen der Lagerhülse 4 und dem Funktionsteil 1 Wälzkörper 5 liegen. Diese sind hier in Form von Nadeln ausgebildet. Zusätzlich oder stattdessen könnten beispielsweise auch Kugeln oder auch eine Gleitlagerung vorgesehen sein. Die Wälzkörper 5 rollen einerseits an der Innenseite der Lagerhülse 4, andererseits an einem Funktionsabschnitt 6 der Mantelfläche 7 des Funktionsteils 1 ab.

Die Mantelfläche 7 umgibt die Längsmittelachse 9 des Funktionsteils 1. Die Richtung der Längserstreckung des Funktionsteils 1 liegt parallel zu dieser Längsmittelachse 9.

Der Bereich, über den die Mantelfläche 7 zumindest im Wesentlichen zylindrisch (=zylindermantelförmig), insbesondere kreiszylindrisch, ist, ist in diesem Ausführungsbeispiel der Funktionsabschnitt 6 des Funktionsteils 1. Die Zylinderachse ist hierbei die Längsmittelachse 9. "Im Wesentlichen zylindrisch" bedeutet hierbei zylindrisch, abgesehen von Ungenauigkeiten oder Toleranzen bei der Herstellung, wie bereits in der Beschreibungseinleitung ausgeführt worden ist. Die Zylinderform der Mantelfläche 7 im Bereich des Funktionsabschnitts6 bildet hier die Funktionskontur des Funktionsabschnitts 6.

Im Bereich seines freien Endes besitzt das Funktionsteil 1 stirnseitig eine Stirnfläche 8, die das Funktionsteil 1 in axialer Richtung, also in Richtung seiner Längsmittelachse 9 begrenzt. Die Abgrenzung zwischen der Mantelfläche 7 und der Stirnfläche 8 kann beispielsweise dort angesetzt werden, wo die Oberflächennormale auf das Funktionsteil 1, wenn man ausgehend von einem vom freien Ende abgelegenen mittleren Bereich des Funktionsteils 1 in Richtung zum freien Ende des Funktionsteils 1 geht, einen Winkel von 45° zur Längsmittelachse 9 erstmals unterschreitet.

Ein beim Übergang zwischen der Mantelfläche 7 und der Stirnfläche 8 liegender Übergangsbereich kann in einem Winkelbereich zwischen 10° und 45° zur Längsmittelachse 9 angesetzt werden.

In einem radial mittleren Bereich weist die Stirnfläche 8 eine gegenüber einem radial umliegenden Bereich in axialer Richtung vorspringende Erhebung 10 auf. Im Längsmittelschnitt (bzw. in Seitenansicht des Funktionsteils 1) gesehen erstreckt sich das Funktionsteil 1 im Bereich der Erhebung 10 somit weiter in die von seiner Basis zu seinem freien Ende weisende axiale Richtung als in einem der Erhebung 10 benachbarten Bereich. Bevorzugterweise liegt die Stelle der größten axialen Erstreckung des Funktionsteils 1 in diese axiale Richtung im Bereich der Erhebung 10. Die Erhebung 10 wird von einem konkaven Bereich 11 der Stirnfläche 8 vollständig, also ringförmig umgeben. Im konkaven Bereich 11 ist die Stirnfläche 8 bezogen auf die axiale Richtung nach innen gewölbt. Hierbei weist die Stirnfläche 8 in der dargestellten Ausführungsform im konkaven Bereich 11 eine Vertiefung gegenüber einem Umfangsrand 12 der Stirnfläche auf (das Funktionsteil erstreckt sich im Bereich dieser Vertiefung also weniger weit in die vom axial mittleren Bereich des Funktionsteils 1 zu seinem freien Ende weisende axiale Richtung als im Bereich des Umfangsrandes). Bei diesem Umfangsrand 12 schließt die Stirnfläche 8 an den zylindermantelförmig ausgebildeten Funktionsabschnitt 6 der Mantelfläche 7 des Funktionsteils 1 an.

Die Erhebung 10 kann wie dargestellt eine mehr oder weniger stark ausgeprägte zentrale Vertiefung aufweisen. In diese kann ein Vorsprung 13 der Lagerhülse 4 eingreifen, welcher das Funktionsteil 1 in axialer Richtung abstützt. Eine Abstützung des Funktionsteils 1 in axialer Richtung kann aber im Bereich der Erhebung 10 auch erfolgen, ohne dass diese mit einer Vertiefung ausgebildet ist. Es kann sogar eine zusätzliche, beispielsweise zapfenartige, Erhebung vorgesehen sein.

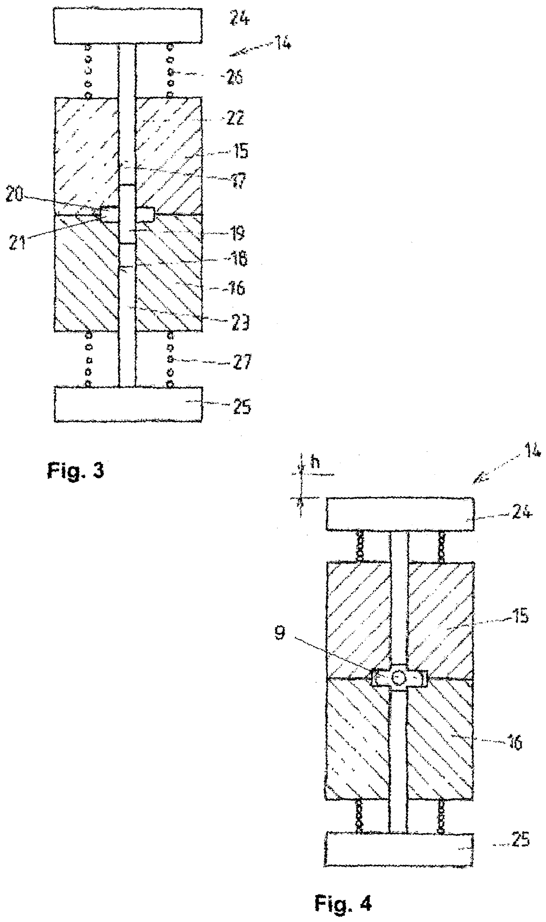

Die Herstellung eines erfindungsgemäß ausgebildeten Funktionsteils wird im Folgenden für ein erstes Ausführungsbeispiel der Erfindung anhand der Fig. 3 bis 10 erläutert.

Zunächst erfolgt das Fließpressen des Funktionsteils 1 bzw. eines Bauteils 2, hier eines Zapfenkreuzes, welches mindestens ein in erfindungsgemäßer Weise auszubildendes Funktionsteil 1 aufweist. Im Ausführungsbeispiel besitzt das auszubildende Zapfenkreuz 2 vier Funktionsteile 1, deren Längsmittelachsen 9 in einer gemeinsamen Ebene liegen, wobei die Längsmittelachse 9 von in Umfangsrichtung aufeinanderfolgenden Funktionsteilen 1 jeweils rechtwinkelig zueinander stehen.

Das Fließpressen erfolgt in einem Presswerkzeug 14, welches erste und zweite Matrizen 15, 16 aufweist. Die Matrizen 15, 16 weisen jeweils eine rechtwinkelig zur Trennebene zwischen den Matrizen 15, 16 stehende Bohrung 17, 18 auf, wobei diese Bohrungen 17, 18 miteinander fluchten und einen durchgehenden Kanal ausbilden. In einem zentralen Teil dieses Kanals ist ein zylindrischer Rohling 19 eingelegt, der sich über einen Teil seiner Ausdehnung in die Bohrung 17 und über den anderen Teil seiner Ausdehnung in die Bohrung 18 erstreckt.

Im Bereich ihrer Trennebene besitzen die Matrizen 15, 16 Aussparungen 20, 21, die zusammen Hohlräume mit zylindrischen Mantelflächen ausbilden. Die Längsmittelachsen dieser Hohlräume liegen in einer gemeinsamen Ebene und es sind insgesamt vier Hohlräume vorhanden, wobei die Längsmittelachsen von in Umfangsrichtung aufeinanderfolgenden Hohlräumen jeweils rechtwinkelig aufeinander stehen (nur zwei dieser Hohlräume sind in der Schnittdarstellung der Matrizen 15, 16 von Fig. 3 sichtbar). In die Bohrungen 17, 18 sind Fließpressstempel 22, 23 eingeführt, zwischen denen der Rohling 19 liegt. Die Fließpressstempel 22, 23 sind jeweils an einer Trägerplatte 24, 25 angebracht, wobei zwischen den Trägerplatten 24, 25 und den Matrizen 15, 16 Druckfedern 26, 27 angeordnet sind.

Durch das Zusammendrücken der Trägerplatten 24, 25 um den Weg h wird der Rohling 19, wenn die Fließpresstempel 22, 23 zuvor beidseitig am Rohling 19 angelegen sind, ebenfalls um den Betrag h gestaucht. Hierbei wird Material des Rohlings 19 in die Aussparungen 20, 21 gepresst, wobei das Material quer zur Bewegungsrichtung der Fließpressstempel 22, 23 fließt. Dadurch werden die Funktionsteile 1 gebildet. Die freien Enden der Funktionsteile 1 weisen hierbei einen Abstand von den Begrenzungen der Aussparungen 20, 21 auf, sodass sich im Bereich der freien Enden der Funktionsteile 1 Freiformflächen ausbilden. Diese bilden die Stirnflächen 8 der Funktionsteile 1 nach dem Fließpressvorgang.

Die Herstellung entspricht insoweit dem Stand der Technik, beispielsweise wie in der in der Beschreibungseinleitung genannten DE 2 819 167 A1 beschrieben.

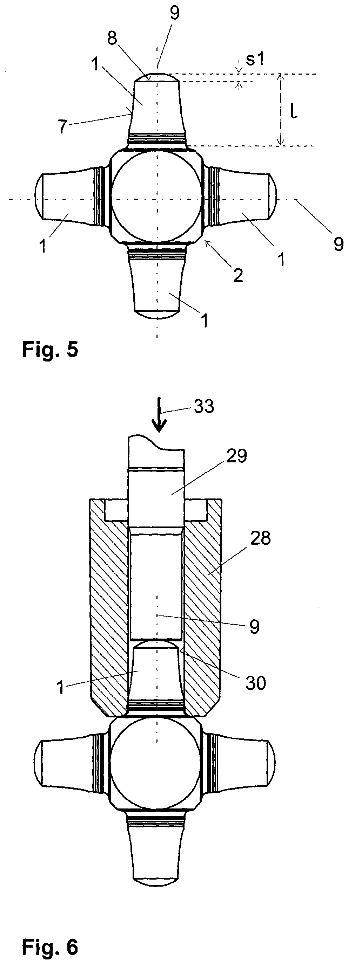

Das aus dem Presswerkzeug herausgenommene Zapfenkreuz 2 ist in Fig. 5 dargestellt. Für die Funktionsteile 1 ist ihre jeweilige Längsmittelachse 9 eingezeichnet. Die Mantelfläche 7 des fließgepressten Funktionsteils 1 umgibt die Längsmittelachse 9.

Die Mantelflächen 7 der fließgepressten Funktionsteile 1 sind in Fig. 5 mit einer von der Zylinderform abweichenden Form dargestellt und zwar derart, dass sich die Funktionsteile 1 zu ihren freien Enden hin verjüngen, im Wesentlichen konisch. Die Abweichung von der Zylinderform ist hierbei zur Veranschaulichung stark übertrieben dargestellt. Beispielsweise kann die Konizität im Bereich von 0,2° liegen.

Die axialer Erstreckung s1 der von der Stirnfläche gebildeten Erhebung kann im Bereich von 1-2mm liegen, während die gesamte Länge I des Funktionsteils beispielsweise im Bereich von 5mm bis 15mm liegen kann.

In der Folge wird eine Nachbearbeitung der Funktionsteile 1 durchgeführt, wobei die Nachbearbeitung anhand eines der Funktionsteile 1 im Folgenden näher erläutert wird:
Zunächst wird ein hülsenförmiges Kalibrierwerkzeug 28 in axialer Richtung des Funktionsteils vom freien Ende des Funktionsteils her auf dieses aufgeschoben. Zumindest ein an das freie Ende des Funktionsteils 1 anschließender axialer Abschnitt des Funktionsteils 1, im Ausführungsbeispiel das gesamte Funktionsteil 1, liegt im inneren Hohlraum dieses hülsenförmigen Kalibrierwerkzeugs. Dieser innere Hohlraum des Kalibrierwerkzeugs 28 wird somit von der inneren Wandoberfläche 30 des hülsenförmigen Kalibrierwerkzeugs 28 umgeben.

In der Folge wird ein in das Kalibrierwerkzeug 28 bereits ragender oder in diese eingeführter Nachbearbeitungsstempel 29 in axialer Richtung des Kalibrierwerkzeugs 28 bzw. des Funktionsteils 1 verfahren, bis er an das freie Ende des Funktionsteils 1 anläuft. Dieser Zustand ist in Fig. 6 dargestellt (der Pfeil 33 zeigt die Verschieberichtung). Es könnte auch vorgesehen sein, das Kalibrierwerkzeug 28 zusammen mit dem Nachbearbeitungsstempel 29 in Richtung des Pfeils 33 axial auf das Funktionsteil 1 aufzuschieben, bis der Nachbearbeitungsstempel 29 an das freie Ende des Funktionsteils 1 anläuft, womit das Ende der gemeinsamen axialen Verschiebung des Kalibrierwerkzeugs 28 und des Nachbearbeitungsstempels 29 erreicht ist.

In Fig. 6 ist zwischen dem an die Stirnfläche 8 anschließenden Abschnitt der Mantelfläche 7 und der die Mantelfläche 7 umgebenden Wandoberfläche 30 des Kalibrierwerkzeugs 28 ein Spalt dargestellt. Das Kalibrierwerkzeug 28 hätte damit beim Aufschieben auf das Funktionsteil 1 keine Formgebung des Funktionsteils 1 durchgeführt. Mit Vorzug ist es aber auch möglich, den Durchmesser des Kalibrierwerkzeugs 28 so zu wählen, dass es beim Aufschieben des Kalibrierwerkzeugs 28 auf das Funktionsteil 1 in einer an die Mantelfläche 7 anschließenden Schicht zu einem Materialfluss von Material des Funktionsteils 1 kommt, d.h. es wird bereits beim Aufschieben des Kalibrierwerkzeugs 28 ein erster Kalibrierschritt des Funktionsteils 1 durchgeführt, beispielsweise um die Rundheit des Funktionsteils 1 zu verbessern.

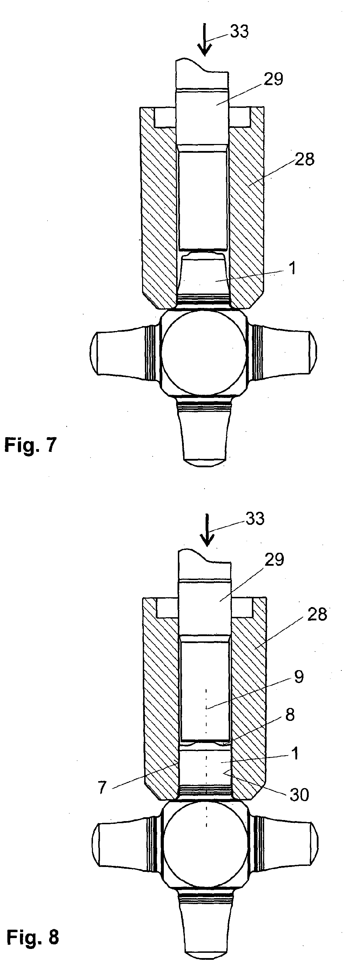

In der Folge wird der Nachbearbeitungsstempel 29 mit einer so hohen Kraft gegen das freie Ende des Funktionsteils 1 gepresst (in Richtung des Pfeils 33), dass es zu einem Materialfluss von Material des Funktionsteils kommt. Fig. 7 zeigt ein Zwischenstadium dieses Nachpressvorgangs und Fig. 8 zeigt den Zustand am Ende dieses Nachpressvorgangs. Durch diesen Nachpressvorgang wird das Funktionsteil 1 vor allem im Bereich des Zapfenendes gestaucht. Durch dieses Stauchen kommt es zu einem Materialfluss von Material des Funktionsteils in radialer Richtung, insbesondere im Bereich der gewölbten Stirnfläche 8. Aber auch gegebenenfalls vor dem Nachpressvorgang zwischen der Mantelfläche 7 und der Wandoberfläche 30 vorhandene Spaltbereiche können dadurch geschlossen werden. Im Bereich des äußeren Umfangs des Funktionsteils 1, in einer an die Wandoberfläche 30 anschließenden Schicht kommt es weiters im Endabschnitt des Funktionsteils 1 zu einem Materialfluss in axialer Richtung, die der Richtung, in welche der Nachbearbeitungsstempel 29 gegen das Zapfenende gepresst wird, entgegengerichtet ist. Es kommt dadurch zu einer Verlängerung des zumindest im Wesentlichen zylindrischen Teils der Mantelfläche 7. Der Funktionsabschnitt 6 der Mantelfläche 7, über welchen diese zur Lagerung von Wälzkörpern 5 dient, kann damit verlängert werden.

Im Beispiel erfolgt der Matrialfluss in axialer Richtung in einer freien Umformung. Es ist jedoch denkbar und möglich durch eine zusätzliche konvexe Formgebung des Nachbearbeitungsstempels (nicht dargestellt) diesen Werkstofffluss noch zu unterstützen. Allerdings sollte bevorzugt stets auch eine freie nicht werkzeuggebundene Umformung ermöglicht bleiben.

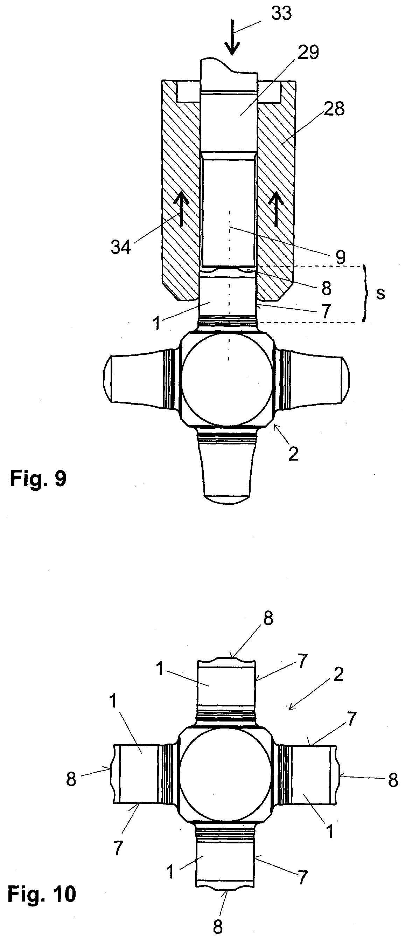

Nach dem Nachpressvorgang durch den Nachbearbeitungsstempel 29 wird das Kalibrierwerkzeug 28 vom Funktionsteil 1 abgezogen, vgl. Fig. 9. Das Abziehen des Kalibrierwerkzeugs 28 in die Richtung 34 kann hierbei gegen eine große, dem Abziehen entgegengerichtete Kraft erfolgen. Beim Abziehen des hülsenförmigen Kalibrierwerkzeugs 28 nach dem Nachpressvorgang mit dem Nachbearbeitungsstempel 29 wird in einer an die Mantelfläche 7 anschließenden Schicht ein Materialfluss von Material des Funktionsteils 1 bewirkt. Beim Abziehen des Kalibrierwerkzeugs 28 vom Funktionsteil 1 bleibt der Nachbearbeitungsstempel 29 zunächst noch an das freie Ende des Funktionsteils 1 angepresst. Die Presskraft kann hierbei niedriger sein als bei der Stauchung des freien Endes des Funktionsteils 1 mit dem Nachbearbeitungsstempel 29. Das Anpressen wird günstigerweise beendet, kurz bevor das Kalibrierwerkzeug 28 vollständig vom Funktionsteil 1 abgezogen ist. Der Nachbearbeitungsstempel 29 bleibt also zumindest über einen Teilweg des Abziehweges s des Kalibrierwerkzeuges 28 an die Stirnfläche 8 des Funktionsteils 1 angepresst. Der Abziehweg s endet, sobald das Funktionsteil vollständig außerhalb des Hohlraums des Kalibrierwerkzeugs 28 liegt, also keine axiale Überlappung mehr vorhanden ist. Vorzugsweise beträgt der Teilweg mindestens 70%, besonders bevorzugt mindestens 90% des gesamten Abziehweges s, anschließend an dessen Beginn. Die Steuerung des Teilweges, über welchen eine Anpresskraft aufrechterhalten wird, kann durch eine Erfassung der Position des Kalibrierwerkzeugs 28 oder durch eine Zeitmessung (bei vorgegebener Geschwindigkeit des Kalibrierwerkzeugs 28) erfolgen. Durch eine gezielte Steuerung der Presskraft in Abhängigkeit von dem Verfahrweg des Kalibrierwerkzeugs 28 beim Abziehen (wobei der Verfahrweg durch eine Positionserfassung des Kalibrierwerkzeugs 28 oder durch eine Zeitmessung der Zeit seit dem Beginn des Abziehens erfasst wird) und/oder der Verfahrkraft, die zum Abziehen des Kalibrierwerkzeugs 28 erforderlich ist, kann das Kalibrierergebnis noch verbessert werden.

Das Bauteil 2 mit den Funktionsteilen 1, die alle in der beschriebenen Weise nachbearbeitet worden sind, ist in Fig. 10 dargestellt.

Falls gewünscht, kann in einem zentralen Bereich der Erhebung 10 bei der Nachbearbeitung eine Vertiefung eingebracht werden, beispielsweise durch eine entsprechende Erhebung in einem zentralen Bereich des Nachbearbeitungsstempels 29. Nach der beschriebenen Nachbearbeitung sind die formgebenden Bearbeitungsschritte an einem in erfindungsgemäßer Weise ausgebildeten Funktionsteil 1 mit Vorteil abgeschlossen. Insbesondere sind keine nachgeschalteten Schleifoperationen erforderlich. Ein erfindungsgemäß ausgebildetes Funktionsteil kann in der Folge in herkömmlicher Weise gehärtet werden.

Denkbar und möglich wäre es auch, vor dem Härten einen oder mehrere weitere Kalibrierschritte durchzuführen.

Die beschriebene Nachbearbeitung kann auch gleichzeitig für zwei oder mehr Funktionsteile durchgeführt werden. Insbesondere können sich gegenüberliegende Funktionsteile, deren Längsmittelachse 9 auf einer Linie liegen, gleichzeitig kalibriert werden, wodurch die Abstützung der Presskräfte besonders vorteilhaft ist.

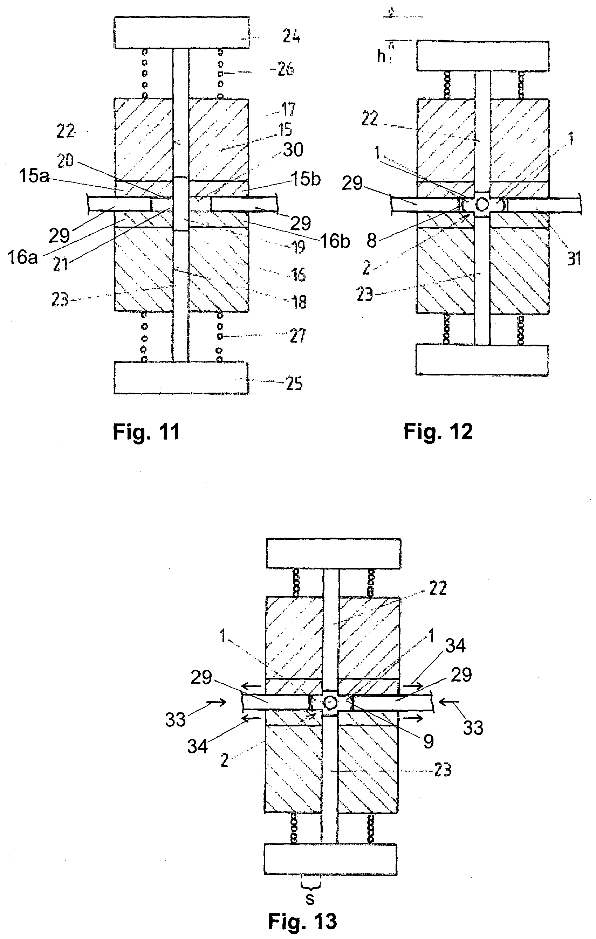

Ein zweites Ausführungsbeispiel einer erfindungsgemäßen Herstellung eines Funktionsteils wird im Folgenden anhand der Fig. 11 bis 13 beschrieben.

Zunächst erfolgt wiederum das Fließpressen des Funktionsteils 1 bzw. des das mindestens eine Funktionsteil 1 aufweisenden Bauteils 2. Das in Fig. 11 dargestellte Presswerkzeug entspricht hierbei dem zuvor anhand von Fig. 3 beschriebenen Presswerkzeug mit dem Unterschied, dass nur zwei gegenüberliegende Aussparungen 20, 21 vorgesehen sind, welche bis zur jeweiligen Seitenfläche der jeweiligen Matrize 15, 16 fortgesetzt sind, sodass sich ein insgesamt zylindrischer Kanal ergibt. In die gegenüberliegenden zylindrischen Kanäle ist jeweils ein Nachbearbeitungsstempel 29 eingeführt, wobei zwischen dem stirnseitigen Ende des Nachbearbeitungsstempels 29 und dem zentralen, den Rohling 19 aufnehmenden Kanal ein Freiraum verbleibt. In diesen Hohlraum hinein wird das Material des Rohlings 19 beim Zustellen der Fließpressstempel 22, 23 hineingepresst, um das jeweilige Funktionsteil 1 auszubilden. Zwischen der Stirnfläche des jeweiligen Funktionsteils 1 und dem Nachbearbeitungstempel 29 verbleibt hierbei über die gesamte Ausdehnung der Stirnfläche 8 (wie in Fig. 12 dargestellt) oder zumindest über einen Teil der Ausdehnung der Stirnfläche 8 ein Abstand, wobei in diesem beabstandeten Bereich die Stirnfläche 8 als Freiformfläche ausgebildet ist.

Nach dem Fließpressen verbleibt hier das Bauteil 2 im Presswerkzeug. Die Funktionsteile 1 sind somit in einem Hohlraum angeordnet, der von einer Wandoberfläche 30 insgesamt umfänglich begrenzt ist, wobei diese Wandoberfläche 30 zum Teil von der ersten Matrize 15 und zum Teil von der zweiten Matrize 16 gebildet wird.

In der Folge wird der einem jeweiligen Funktionsteil 1 zugeordnete Nachbearbeitungsstempel 29 derart gegen das freie Ende des Funktionsteils 1 gepresst, dass eine plastische Verformung des Funktionsteils, insbesondere in seinem Endbereich durchgeführt wird. Die plastische Verformung ist hierbei gleich wie im ersten Ausführungsbeispiel beschrieben.

Die Matrizen 15, 16 weisen Matrizenteile 15a, 15b, 16a, 16b auf, welche jeweils an die Trennebene anschließen und die Aussparungen 20, 21 aufweisen. Die Matrizenteile 15a, 16a einerseits und die Matrizenteile 15b, 16b andererseits können hierbei jeweils in eine Richtung 34 ausgezogen werden, welche parallel zur Richtung 33 liegt, in die der jeweilige Nachbearbeitungsstempel 29 an das freie Ende des Funktionsteils 1 angepresst wird und dieser entgegengesetzt ist. In diese Richtung 34 werden die Matrizenteile 15a, 16a bzw. 15b, 16b vom Funktionsteil 1 abgezogen, während der jeweilige Nachbearbeitungsstempel 29 zumindest über einen Teilweg des Abziehweges s an die Stirnfläche 8 des jeweiligen Funktionsteils 1 angepresst bleibt. Bei diesem Abziehen der Matrizenteile 15a, 16a bzw. 15b, 16b kommt es zu einem Materialfluss von Material des jeweiligen Funktionsteils 1.

Günstigerweise sind damit die formgebenden Bearbeitungsschritte am jeweiligen Funktionsteil wiederum abgeschlossen und es kann in der Folge ein Härten der ausgebildeten Funktionsteile durchgeführt werden. Denkbar und möglich wäre es aber auch, dass nach der Entnahme des das mindestens eine Funktionsteil 1 aufweisenden Bauteils 2 aus dem Presswerkzeug und vor dem Härten noch mindestens ein Kalibrierschritt des Funktionsteils bzw. eines jeweiligen Funktionsteils durchgeführt wird. Beispielsweise könnte eine Hülse auf das Funktionsteil 1 aufgeschoben werden, wobei diese Hülse beim Aufschieben auf das Funktionsteil einen Materialfluss von Material des Funktionsteils bewirkt. Dadurch könnte beispielsweise die Rundheit des Funktionsteils weiter verbessert werden.

Analog zu den beschriebenen Ausführungsbeispielen können auch andere Bauteile ausgebildet werden, welche mindestens einen Lagerzapfen 1 aufweisen, beispielsweise Tripoden.

Im Folgenden werden Ausführungsformen der Erfindung beschrieben, in denen die Funktionsteile Stirnzahnräder sind. In den Ausführungsbeispielen werden die Bauteile insgesamt vom beschriebenen Funktionsteil gebildet. Es könnten auch Bauteile ausgebildet werden, welche mehr als ein Funktionsteil aufweisen, z.B. Bauteile mit zwei Stirnzahnrädern mit einer jeweiligen Verzahnung, die koaxial zueinander liegen und jeweils einen axialen Abschnitt des Bauteils umfassen.

Zu den zuvor beschriebenen Ausführungsbeispielen äquivalente Teile werden wiederum mit den gleichen Bezugszeichen bezeichnet.

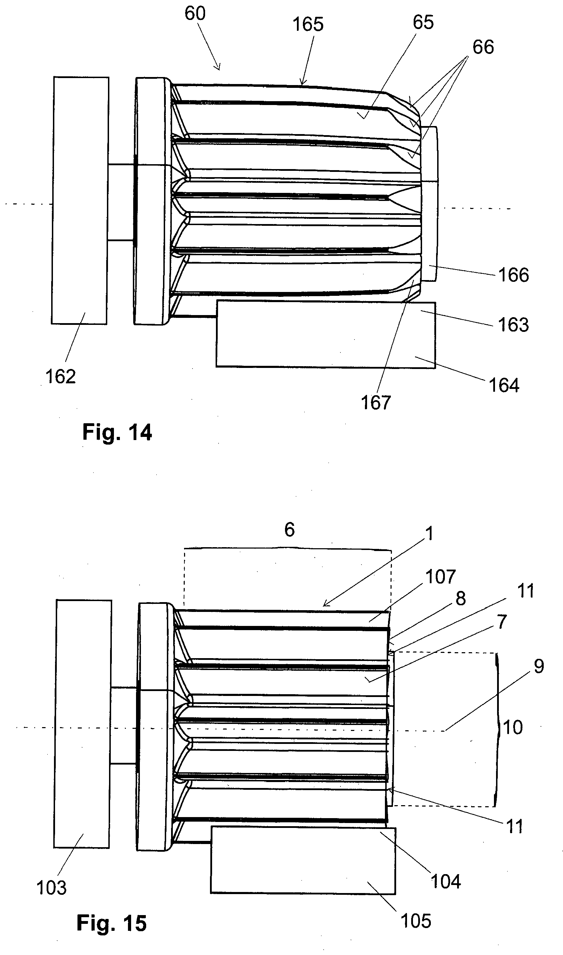

Zur Vorbereitung der Beschreibung dieser Ausführungsformen zeigt Fig. 14 ein Ausführungsbeispiel eines in herkömmlicher Weise ausgebildeten Funktionsteils 60 in Form eines Stirnzahnrades mit einer Verzahnung 165, welche die Funktionskontur des Funktionsteils 60 bildet. Das Funktionsteil 60 ist gegenüber einem Lagerteil 162 drehbar gelagert. Die Verzahnung 165 greift in eine Gegenverzahnung 163 eines nur schematisch dargestellten weiteren Zahnrades 164 ein.

An einem bezogen auf die axiale Richtung freien Ende des Funktionsteils 60 begrenzt eine Stirnfläche 66 das Funktionsteil 60 in axialer Richtung. Die Stirnfläche 66 umfasst eine Lagererhöhung 166, einen diese umgebenden abgeflachten Abschnitt und eine daran radial nach außen anschließende Freiformfläche 167,die konvex nach außen gewölbt ist (und in der Folge gegebenenfalls abgedreht wird), die sich in einen Übergangsbereich zwischen Stirnfläche 66 und Mantelfläche bzw. Funktionskontur fortsetzt. Die Lagererhöhung 166 ist für axiale Distanzierungen zu weiteren Bauteilen vorgesehen, kann aber auch entfallen. Im Bereich der Lagererhöhung 166 in der Stirnfläche 66 ist im Presswerkzeug eine Begrenzungsfläche angeordnet, an die das Material des Zapfenkreuzes beim Fließpressen geführt wird. Auch andere Formen, wie beispielsweise Vertiefungen können auf diese Weise bei herkömmlichen Stirnzahrädern stirnseitig ausgebildet werden.

Ein Funktionsteil 1, das in Form eines Stirnzahnrades ausgebildet ist, gemäß einer dritten Ausführungsform der Erfindung, ist in Fig. 15 dargestellt. Das Funktionsteil 1 kann Teil eines Getriebes sein. Im gezeigten Ausführungbeispiel ist das Funktionsteil 1 von einem Lagerteil 103 drehbar um seine Längsmittelachse 7 gelagert. Die Verzahnung 107 des Funktionsteils 1 greift in eine Gegenverzahnung 104 eines nur schematisch dargestellten weiteren Zahnrads 105 ein.

Die Verzahnung 107 wird von einem Abschnitt der axialen Erstreckung der Mantelfläche 7 des Funktionsteils 1 gebildet, welche die Längsmittelachse 9 umgibt. Die Richtung der Längserstreckung des Funktionsteils 1 liegt parallel zur Längsmittelachse 7.

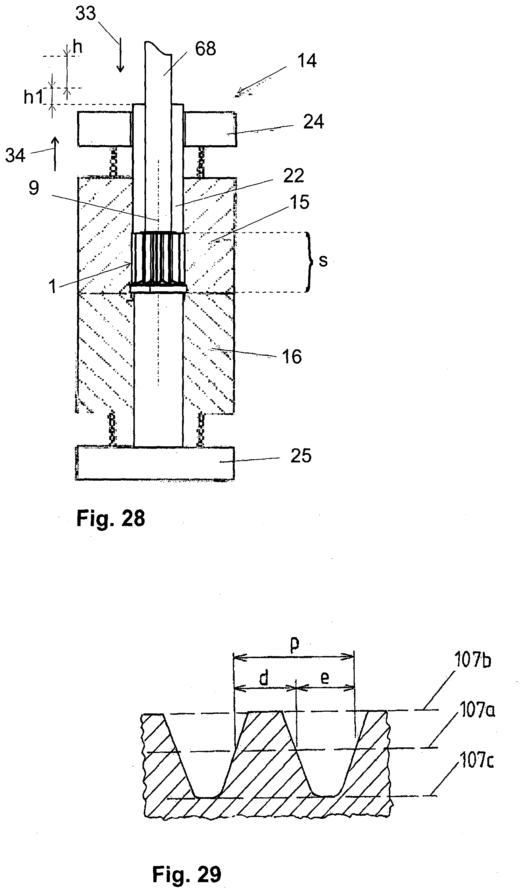

Anhand von Fig. 29 wird die Profilbezugslinie 107a der Verzahnung 107 erläutert. In Fig. 29 ist ein Teil der Verzahnung 107 im rechtwinkelig zur Längsmittelachse 9 des Funktionsteils liegenden Querschnitt an einer Stelle der Längserstreckung der Verzahnung 107 dargestellt, wobei die Verzahnung 107 in eine Ebene abgerollt (ausgebreitet) dargestellt ist. Die Profilbezugslinie 107a ist diejenige Linie, auf der die Zahndicke d gleich der Lückenweite e ist. Die Lückenweite e ist gleich der halben Teilung p. Die in eine Ebene ausgerollte Verzahnung wird auch als Bezugsprofil bezeichnet, welches von der zur Profilbezugslinie parallelen Kopflinie 107b und der dazu parallelen Fußlinie 107c eingeschlossen wird.

Wird die in Fig. 29 dargestellte Verzahnung wieder um die Längsmittelachse 109 aufgerollt, so verläuft die Profilbezugslinie 107a kreisförmig um die Längsmittelachse 9. Die Profilbezugslinie107a ist also die um die Längsmittelachse 9 kreisförmig umlaufende Linie, auf der die Zahndicke gleich der Lückenweite ist. An jeder Stelle der axialen Erstreckung der Verzahnung weist die Profilbezugslinie107a einen bestimmten Abstand von der Längsmittelachse 9 auf. Der Bereich, über welchen der Abstand der Profilbezugslinie 107a von der Längsmittelachse im Wesentlichen konstant ist, ist der Funktionsabschnitt 6 der Verzahnung 107. Über diesen Funktionsabschnitt bildet die Verzahnung 107 die Funktionskontur des als Stirnzahnrad ausgebildeten Funktionsteils.

Anstelle des im Wesentlichen konstanten Abstands der Profilbezugslinie von der Längsmittelachse 9 könnte auch ein im Wesentlich konstanter Abstand der Zahnspitzen von der Längsmittelachse 9 herangezogen werden.

"Im Wesentlichen konstant" bedeutet hierbei konstant, abgesehen von Ungenauigkeiten oder Toleranzen bei der Herstellung, wie bereits in der Beschreibungseinleitung ausgeführt worden ist.

In den Figuren ist ein gerade verzahntes Stirnzahnrad dargestellt. Für ein schräg verzahntes Stirnzahnrad gilt Analoges.

Im Bereich seines freien Endes besitzt das Funktionsteil 1 stirnseitig eine Stirnfläche 8, die die Mantelfläche 7 in axialer Richtung, also in Richtung seiner Längsmittelachse 9 begrenzt. Die Abgrenzung zwischen der Mantelfläche 7 und der Stirnfläche 8 kann beispielsweise dort angesetzt werden, wo die Oberflächennormale auf der Mantelfläche 7 des Funktionsteils 1, wenn man ausgehend von einem vom freien Ende abgelegenen mittleren Bereich des Funktionsteils 1 in Richtung zum freien Ende des Funktionsteils 1 geht, im Längsschnitt gesehen einen Winkel von 45° zur Längsmittelachse 9 erstmals unterschreitet. Ein beim Übergang zwischen der Mantelfläche 7 und der Stirnfläche 8 liegender Übergangsbereich kann in einem Winkelbereich zwischen 10° und 45° zur Längsmittelachse 9 angesetzt werden.

In einem radial mittleren Bereich weist die Stirnfläche 8 eine gegenüber einem radial umliegenden Bereich in axialer Richtung vorspringende Erhebung 10 auf. Im Längsmittelschnitt (bzw. in Seitenansicht des Funktionsteils 1) gesehen erstreckt sich das Funktionsteil 1 im Bereich der Erhebung 10 somit weiter in die von seiner Basis zu seinem freien Ende weisende axiale Richtung als in einem der Erhebung benachbarten Bereich. Bevorzugterweise liegt die Stelle der größten axialen Erstreckung des Funktionsteils 1 in diese axiale Richtung im Bereich der Erhebung 10. Die Erhebung 10 wird von einem konkaven Bereich 11 der Stirnfläche 8 vollständig, also ringförmig umgeben. Im konkaven Bereich 11 ist die Stirnfläche 8 bezogen auf die axiale Richtung nach innen gewölbt. Hierbei weist die Stirnfläche 8 in der dargestellten Ausführungsform im konkaven Bereich 11 eine Vertiefung gegenüber einem Umfangsrand 12 der Stirnfläche auf. Der Funktionsabschnitt erstreckt sich im Ausführungsbeispiel bis zum Umfangsrand. Der Umfangsrand wird von dem die Verzahnung 107 umschreibenden Kreis am Ende des Funktionsabschnitts gebildet. das Funktionsteil 1 erstreckt sich im Bereich dieser Vertiefung also weniger weit in die vom axial mittleren Bereich des Funktionsteils 1 zu seinem freien Ende weisende axiale Richtung als im Bereich des Umfangsrandes 12.

Die Erhebung 10 kann wie dargestellt eine annähernd ebene Fläche mit einer Öffnung zur Aufnahme einer Lagerachse oder eine andere Form aufweisen.

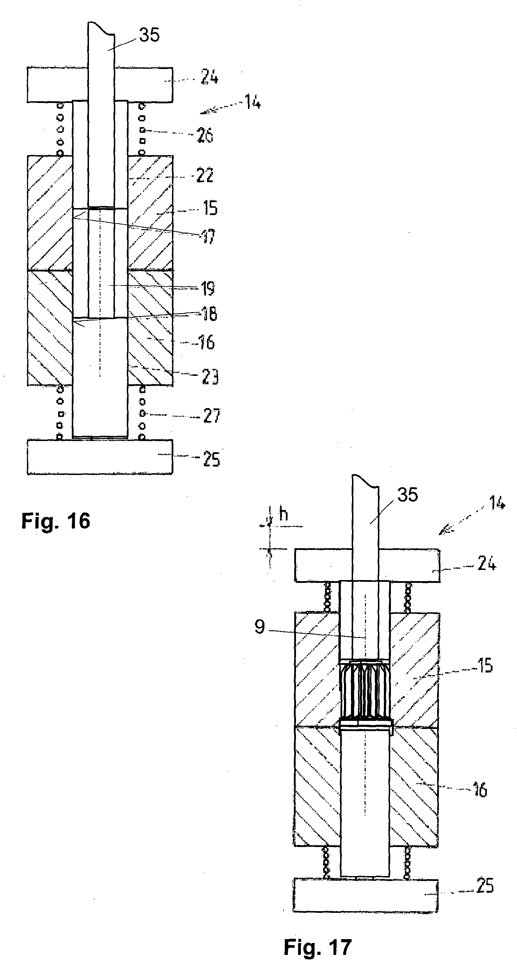

Die Herstellung eines erfindungsgemäß ausgebildeten Funktionsteils in Form eines Stirnzahnrades wird im Folgenden für ein drittes Ausführungsbeispiel der Erfindung anhand der Fig. 16 bis 25 erläutert.

Das Fließpressen des Funktionsteils 1 erfolgt in einem Presswerkzeug 14, welches erste und zweite Matrizen 15, 16 aufweist. Die Matrizen 15, 16 weisen jeweils eine rechtwinkelig zur Trennebene zwischen den Matrizen 15, 16 stehende Bohrung 17, 18 auf, wobei diese Bohrungen 17, 18 miteinander fluchten und einen durchgehenden Kanal ausbilden. In einem zentralen Teil dieses Kanals ist ein zylindrischer Rohling 19 eingelegt, der sich über einen Teil seiner Ausdehnung in die Bohrung 17 und über den anderen Teil seiner Ausdehnung in die Bohrung 18 erstreckt.

Im Bereich ihrer Trennebene besitzen die Matrizen 15, 16 radiale Aussparungen , die zusammen einen Hohlraum mit der zum fertigen Bauteil etwa gegengleichen Mantelflächen ausbilden. Diese Aussparungen sind in den Figuren der Einfachheit halber nicht dargestellt. In die Bohrungen 17, 18 sind Fließpressstempel 22, 23 eingeführt, zwischen denen der Rohling 19 liegt. Die Fließpressstempel 22, 23 sind jeweils an einer Trägerplatte 24, 25 angebracht, wobei zwischen den Trägerplatten 24, 25 und den Matrizen 15, 16 Druckfedern 26, 27 angeordnet sind.

Durch das Zusammendrücken der Trägerplatten 24, 25 um den Weg h wird der Rohling 19, wenn die Fließpresstempel 22, 23 zuvor beidseitig am Rohling 19 angelegen sind, ebenfalls um den Betrag h gestaucht. Hierbei wird Material des Rohlings 19 in die Aussparungen gepresst, wobei das Material quer zur Bewegungsrichtung der Fließpressstempel 22, 23 fließt. Dadurch wird die Verzahnung gebildet. Das, in der Darstellung obere, freie Ende des Funktionsteils 1 weist hierbei einen Freiraum zwischen dem Fließpressstempel 22 und der Verzahnung auf, sodass sich im Bereich des freien Endes des Funktionsteils 1 Freiformflächen ausbilden. Diese bilden Teile der Stirnfläche 8 des Stirnzahnrades nach dem Fließpressvorgang.

In der vorliegenden Beschreibung wurde der Vorgang des Fließpressens des Stirnzahnrades vereinfacht dargestellt. Die Darstellung eines Lochstempels 35 zur Ausbildung der Ausnehmung für die Aufnahme der Achse zur drehbaren Lagerung des Stirnzahnrades wurde aus Gründen der Übersichtlichkeit vereinfacht dargestellt und auf eine Darstellung der Bewegungsabläufe verzichtet. Vergleichbare Verfahren zur Herstellung sind insoweit im Stand der Technik, beispielsweise wie in der in der Beschreibungseinleitung genannten EP 0 560 010 B1 oder auch der JP 10-211539A beschrieben.

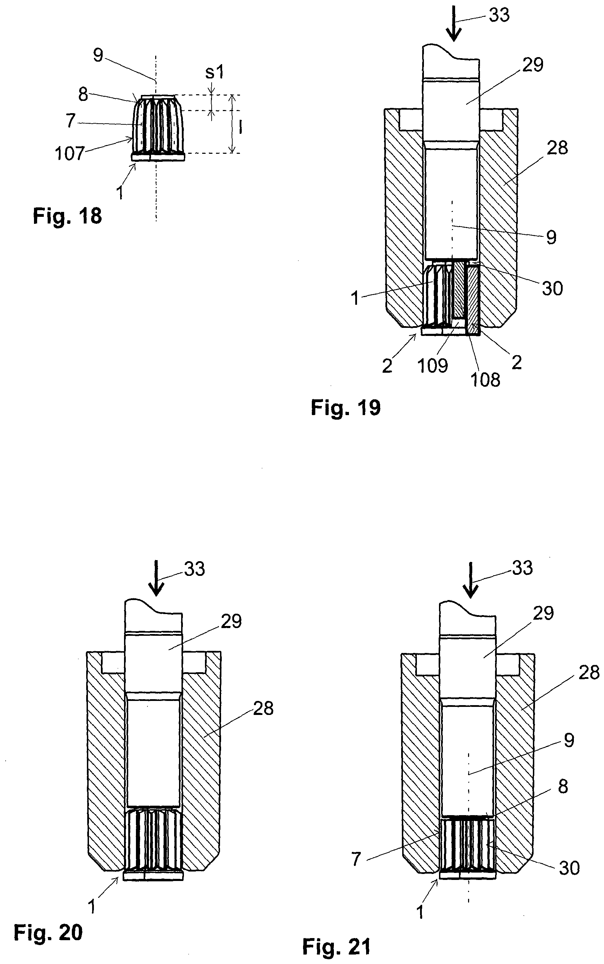

Das aus dem Presswerkzeug herausgenommene Funktionsteil 1 ist in Fig. 18 dargestellt. Für das Funktionsteil 1 ist die Längsmittelachse 9 eingezeichnet. Die Verzahnung 107 des fließgepressten Funktionsteils 1 umgibt die Längsmittelachse 9.

Die Verzahnung 107 des fließgepressten Funktionsteils 1 ist in Fig. 18 mit einer von der geraden Form, bei der die Profilbezugslinie 107 über den Bereich der axialen Erstreckung der Verzahnung 107 einen konstanten Abstand von der Längsmittelachse 9 aufweist, abweichenden Form dargestellt und zwar derart, dass sich die Profilbezugslinie 107 zum freien Ende des Funktionsteils 1 hin der Längsmittelachse 9 annähert. Entsprechend nähern sich die Zahnkämme der Verzahnung 107 der Längsmittelachse 9 an. Die Abweichung von der Parallelität ist hierbei zur Veranschaulichung stark übertrieben dargestellt. Beispielsweise kann die Abweichung im Bereich von 0,2° liegen.

Die axialer Erstreckung s1 der von der Stirnfläche gebildeten Erhebung kann im Bereich von 1 mm-4mm liegen, während die gesamte Länge I des Funktionsteils 1 beispielsweise im Bereich von 5mm bis 50mm liegen kann.

In der Folge wird eine Nachbearbeitung des Funktionsteils 1 durchgeführt.

Zunächst wird ein hülsenförmiges Kalibrierwerkzeug 28 in axialer Richtung des Funktionsteils 1 vom freien Ende des Funktionsteils 1 her auf dieses aufgeschoben. Zumindest ein an das freie Ende des Funktionsteils 1 anschließender axialer Abschnitt der Verzahnung 107, im Ausführungsbeispiel der gesamte Abschnitt der Verzahnung 107, liegt im inneren Hohlraum dieses Kalibrierwerkzeugs 28. Dieser innere Hohlraum des Kalibrierwerkzeugs 28 wird somit von der inneren Wandoberfläche 30 des Kalibrierwerkzeugs umgeben.

In der Folge wird ein in das Kalibrierwerkzeug 28 bereits ragender oder in dieses eingeführter Nachbearbeitungsstempel 29 in axialer Richtung des Kalibrierwerkzeugs 28 bzw. des Funktionsteils 1 verfahren, bis er an das freie Ende des Funktionsteils 1 anläuft. Dieser Zustand ist in Fig. 19 dargestellt (der Pfeil 33 zeigt die Verschieberichtung). Es könnte auch vorgesehen sein, das Kalibrierwerkzeug 28 zusammen mit dem Nachbearbeitungsstempel 29 in Richtung des Pfeils 33 axial auf die Verzahnung 107 aufzuschieben, bis der Nachbearbeitungsstempel 29 an das freie Ende der Verzahnung 107 anläuft, womit das Ende der gemeinsamen axialen Verschiebung des Kalibrierwerkzeugs 28 und des Nachbearbeitungsstempels 29 erreicht ist.

In Fig. 19 ist zwischen dem an die Stirnfläche 8 anschließenden Abschnitt der Mantelfläche 7 der Verzahnung 107 und der die Mantelfläche 7 umgebenden Wandoberfläche 30 des Kalibrierwerkzeugs 28 ein Spalt dargestellt. Das Kalibrierwerkzeug 28 hätte damit beim Aufschieben auf die Verzahnung 107 keine Formgebung der Verzahnung 107 durchgeführt. Mit Vorzug ist es aber auch möglich, den Durchmesser des Kalibrierwerkzeugs 28 so zu wählen, dass es beim Aufschieben des Kalibrierwerkzeugs 28 auf die Verzahnung 107 in einer an die Mantelfläche 7 der Verzahnung anschließenden Schicht zu einem Materialfluss von Material des Funktionsteils 1 kommt, d.h. es wird bereits beim Aufschieben des Kalibrierwerkzeugs 28 ein erster Kalibrierschritt der Verzahnung 107 und damit des Funktionsteils 1 durchgeführt, beispielsweise um die Formabweichungen der Verzahnung 107 zu verringern.

In der Folge wird der Nachbearbeitungsstempel 29 mit einer so hohen Kraft gegen das freie Ende des Funktionsteils 1 gepresst (in Richtung des Pfeils 33), dass es zu einem Materialfluss von Material des Funktionsteils 1 kommt. Fig. 20 zeigt ein Zwischenstadium dieses Nachpressvorgangs und Fig. 21 zeigt den Zustand am Ende dieses Nachpressvorgangs. Durch diesen Nachpressvorgang wird das Funktionsteil 1 vor allem im Bereich des freien Endes gestaucht. Durch dieses Stauchen kommt es zu einem Materialfluss von Material des Funktionsteils 1 in radialer Richtung, insbesondere im Bereich der gewölbten Stirnfläche 8. Aber auch gegebenenfalls vor dem Nachpressvorgang zwischen der Mantelfläche 7 der Verzahnung 107 und der Wandoberfläche 30 vorhandene Spaltbereiche können dadurch geschlossen werden. Im Bereich des äußeren Umfangs des Funktionsteils 1, in einer an die Wandoberfläche 30 anschließenden Schicht kommt es weiters im Endabschnitt der Verzahnung 107 zu einem Materialfluss in axialer Richtung, die der Richtung, in welche der Nachbearbeitungsstempel 29 gegen das Zapfenende gepresst wird, entgegengerichtet ist. Es kommt dadurch zu einer Verlängerung des Funktionsabschnitts 6.

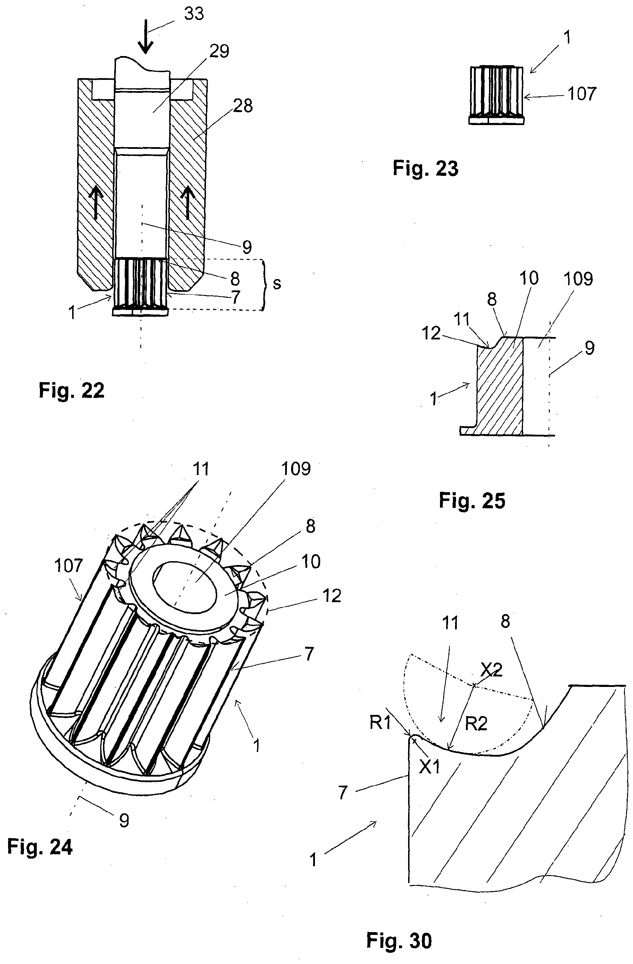

Nach dem Nachpressvorgang durch den Nachbearbeitungsstempel 29 wird das Kalibrierwerkzeug 28 vom Lagerzapfen 1 abgezogen, vgl. Fig. 22. Das Abziehen der Hülse 28 kann hierbei gegen eine große, dem Abziehen entgegengerichtete Kraft erfolgen. Beim Abziehen des Kalibrierwerkzeugs 28 nach dem Nachpressvorgang mit dem Nachbearbeitungsstempel 29 wird in einer an die Mantelfläche 7 der Verzahnung 107 anschließenden Schicht ein Materialfluss von Material des Funktionsteils 1 bewirkt. Beim Abziehen des Kalibrierwerkzeugs 28 vom Funktionsteil 1 bleibt der Nachbearbeitungsstempel 29 zunächst noch an das freie Ende des Funktionsteils 1 angepresst. Die Presskraft kann hierbei niedriger sein als bei der Stauchung des Funktionsteils 1 mit dem Nachbearbeitungsstempel 29. Das Anpressen wird günstigerweise beendet, kurz bevor das Kalibrierwerkzeug 28 vollständig vom Funktionsteil 1 abgezogen ist. Das Anpressen des Nachbearbeitungsstempels 29 erfolgt somit über einen Teilweg des Abziehweges s des Kalibrierwerkzeuges 28. Durch eine gezielte Steuerung der Presskraft in Abhängigkeit von dem Verfahrweg des Kalibrierwerkzeugs 28 beim Abziehen (durch eine Positionserfassung des Kalibrierwerkzeugs 28 oder durch eine Zeitmessung bei bekannter Geschwindigkeit des Kalibrierwerkzeugs 28) und/oder der Verfahrkraft, die zum Abziehen des Kalibrierwerkzeugs 28 erforderlich ist, kann das Kalibrierergebnis noch verbessert werden.

Das Funktionsteil 1 mit der Verzahnung 107, das in der beschriebenen Weise nachbearbeitet worden ist, ist in Fig. 23, 24 und 25 dargestellt. Die Zahnspitzen weisen über den Funktionsabschnitt einen konstanten Abstand von der Längsmittelachse 9 auf. Dabei ist im Teilschnitt entsprechend Fig. 25 die Stirnfläche 8 mit dem konkaven Bereich 11 besonders gut zu erkennen. Dabei ist auch zu erkennen, dass die Verzahnung 7 an der Stirnfläche 8 zwischen den beiden Zahnflanken der einzelnen Zähne ebenfalls konkav ausgebildet ist.

Falls gewünscht, kann in einem zentralen Bereich der Erhebung 10 bei der Nachbearbeitung eine andere Oberflächenstruktur eingebracht werden, beispielsweise durch eine entsprechende Geometrie in einem zentralen Bereich des Nachbearbeitungsstempels 29. Mit Vorteil hat der Nachbearbeitungsstempel einen zentralen Dorn 108, der in die zentrale Öffnung 109 des Funktionsteils 1 eingefahren wird, um ein Fließen des Werkstoffs in den Bereich der Öffnung zu begrenzen. Dies ist in Fig. 19 im Halbschnitt durch Dorn 108 und Funktionsteil 1 auf der Seite rechts von der Längsmittelachse 9 veranschaulicht.

Nach der beschriebenen Nachbearbeitung sind die formgebenden Bearbeitungsschritte an einem in erfindungsgemäßer Weise ausgebildeten Funktionsteil 1 mit der Verzahnung 107 mit Vorteil abgeschlossen. Insbesondere sind keine nachgeschalteten Schleifoperationen oder andere Zerspanungsoperationen erforderlich.

Ein erfindungsgemäß ausgebildetes Stirnzahnrad oder auch andere Bauteil kann in der Folge in herkömmlicher Weise gehärtet werden.

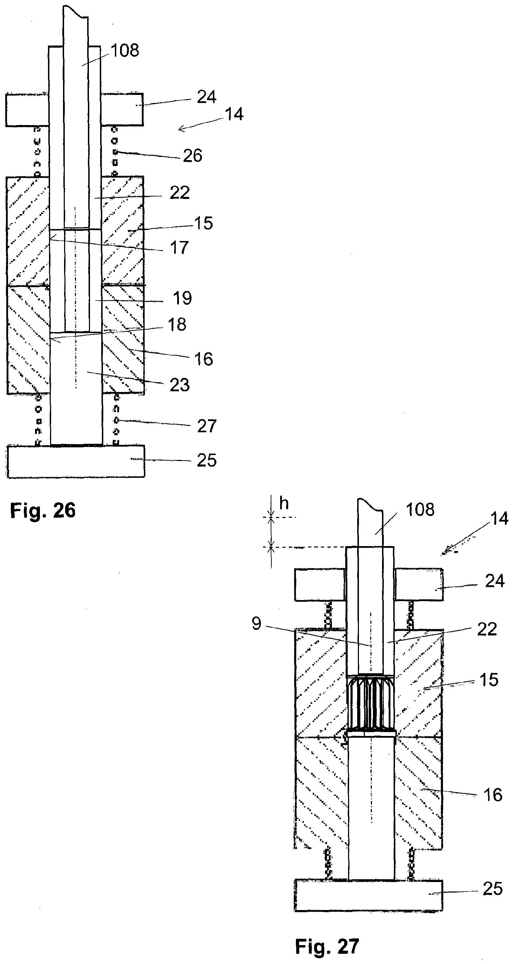

Ein viertes Ausführungsbeispiel einer erfindungsgemäßen Herstellung eines Funktionsteils 1 in Form eines Stirnzahnrades wird im Folgenden anhand der Fig. 26 bis 28 beschrieben.

Zunächst erfolgt wiederum das Fließpressen des Funktionsteils 1. Das in Fig. 26 dargestellte Presswerkzeug entspricht hierbei dem zuvor anhand von Fig. 16 beschriebenen Presswerkzeug mit dem Unterschied, dass der Fließpressstempel 22 unabhängig von der ersten Matrize 15 verfahren werden kann. Zur Ausbildung des Funktionsteils 1 mit der Verzahnung 107 wird das Material des Rohlings 19 beim Zustellen der Fließpressstempel 22, 23 in den Hohlraum der durch die Matrizen 15, 16 begrenzt wird hineingepresst. Zwischen der Stirnfläche des Funktionsteils 1 und dem Fließpressstempel 22 verbleibt hierbei (wie in Fig. 26 dargestellt) ein Abstand, wobei in diesem beabstandeten Bereich die Stirnfläche 8 als Freiformfläche ausgebildet ist.

Nach dem Fließpressen verbleibt hier das Funktionsteil 1 im Presswerkzeug. Zumindest über einen an das die Stirnfläche 8 aufweisende freie Ende ist das Funktionsteil 1 in einem Hohlraum der ersten Matrize 15 angeordnet, welcher von einer an der die Verzahnung 107 bildenden Mantelfläche 7 anliegenden Wandoberfläche 30 umfänglich begrenzt wird.

In der Folge wird der separat ansteuerbare Fließpressstempel 22 um einen weiteren Hub h1 gegen das freie Ende des Funktionsteils 1 gepresst, wobei eine weitere plastische Verformung des Funktionsteils 1, insbesondere in einem Bereich des die Stirnfläche 8 aufweisenden freien Endes, durchgeführt wird. Der Lochstempel 35 verbleibt dabei in der zentralen Öffnung 109 des Bauteils.

In der Folge wird die erste Matrize 15 über den Abziehweg s vom Funktionsteil 1 abgezogen (in Fig. 28 ist die Richtung 34 eingezeichnet). Der Fließpressstempel 22 bleibt hierbei zumindest über einen Teilweg des Abziehweges s an die Stirnfläche 8 des Funktionsteils 1 angepresst. Beim Abziehen der Matrize 15 vom Funktionsteil 1 wird in analoger Weise wie bereits beschrieben ein Materialfluss vom Material des Funktionsteils 1 bewirkt.

Günstigerweise sind damit die formgebenden Bearbeitungsschritte an der Verzahnung 107 des Funktionsteils 1 wiederum abgeschlossen und es kann in der Folge ein Härten des Funktionsteils 1 durchgeführt werden. Denkbar und möglich wäre es aber auch, dass nach der Entnahme des Bauteils aus dem Presswerkzeug und vor dem Härten noch mindestens ein weiterer Kalibrierschritt des Bauteils durchgeführt wird. Beispielsweise könnte eine Hülse auf die Funktionskontur, im Beispiel die Verzahnung, des Bauteils aufgeschoben werden, wobei diese Hülse beim Aufschieben auf die Verzahnung einen Materialfluss von Material des Stirnzahnrades bewirkt. Dadurch könnte beispielsweise die Formabweichung der Verzahnung weiter verkleinert werden.

In der Fig. 30 ist eine schematische Darstellung eines konkaven Verlaufes im Funktionsteil 1 veranschaulicht. Aus der Figur ist der Übergangsbereich zwischen der Mantelfläche 7 und der Stirnfläche 8 ersichtlich. Dabei sind im Längsmittelschnitt gesehen im Übergangsbereich zwischen der Mantelfläche 7 der Stirnfläche 8 sowie im daran anschließenden Bereich der Stirnfläche 8 zwei Abschnitte ausgebildet deren Kontur in Radien einbeschrieben werden kann. Der erste Abschnitt kann mit einem ersten Radius R1, dessen erster Radienmittelpunkt X1 innerhalb des Bauteils angeordnet ist, beschrieben werden. Der zweite Abschnitt, der konkave Bereich 11, kann mit einem zweiten Radius R2, dessen Radienmittelpunkt X2 außerhalb des Bauteils angeordnet ist, beschrieben werden. Dabei ist zu bevorzugen, wenn der Wert des ersten Radius R1 kleiner als ein Fünftel, weiter bevorzugt kleiner als ein Zehntel, des Wertes des zweiten Radius R2 beträgt. Darüberhinaus ist es zu bevorzugen wenn der Wert des zweiten Radius R2 kleiner als das vierhundertfache, bevorzugt kleiner als das zweihundertfache, im Vergleich zum Wert des ersten Radius R1 beträgt.

Anstelle von Stirnzahnrädern können analog zu den beschriebenen Ausführungsbeispielen auch andere Bauteile ausgebildet werden, welche mindestens eine im Querschnitt gesehen punktsymmetrische Funktionsfläche aufweisen, beispielsweise Teile mit zwei oder mehr gegenüberliegenden ebenen Flächen.

**Legende zu den Hinweisziffern:**

| | | | |
|---|---|---|---|
| 1 | Funktionsteil | 27 | Druckfeder |
| 2 | Bauteil | 28 | Kalibrierwerkzeug |
| 3 | Gelenkgabel | 29 | Nachbearbeitungsstempel |
| 4 | Lagerhülse | 30 | Wandoberfläche |
| 5 | Wälzkörper | 33 | Pfeil |
| 6 | Funktionsabschnitt | 34 | Richtung |
| 7 | Mantelfläche | 35 | Lochstempel |
| 8 | Stirnfläche | 60 | Funktionsteil |
| 9 | Längsmittelachse | 61 | Bauteil |
| 10 | Erhebung | 62 | Gelenkgabel |
| 11 | konkaver Bereich | 63 | Lagerhülse |
| 12 | Umfangsrand | 64 | Nadel |
| 13 | Vorsprung | 65 | Mantelfläche |
| 14 | Presswerkzeug | 66 | Stirnfläche |
| 15 | erste Matrize | 103 | Lagerteil |
| 15a | Matrizenteil | 104 | Gegenverzahnung |
| 15b | Matrizenteil | 105 | Zahnrad |
| 16 | zweite Matrize | 107 | Verzahnung |
| 16a | Matrizenteil | 107a | Profilbezugslinie |
| 16b | Matrizenteil | 107b | Kopflinie |
| 17 | Bohrung | 107c | Fußlinie |
| 18 | Bohrung | 108 | Dorn |
| 19 | Rohling | 109 | Öffnung |
| 20 | Aussparung | 162 | Lagerteil |
| 21 | Aussparung | 163 | Gegenverzahnung |
| 22 | Fließpressstempel | 164 | Zahnrad |
| 23 | Fließpressstempel | 165 | Verzahnung |
| 24 | Trägerplatte | 166 | Lagererhöhung |
| 25 | Trägerplatte | 167 | Freiformfläche |
| 26 | Druckfeder | | |

## Patentansprüche

1. Verfahren zur Bearbeitung eines Funktionsteils (1), das sich in eine Längsrichtung erstreckt und eine Mantelfläche (7), die eine in die Längsrichtung verlaufende Längsmittelachse (9) des Funktionsteils (1) umgibt, und eine das Funktionsteil (1) an einem freien Ende in axialer Richtung begrenzende Stirnfläche (8) aufweist, wobei ein in Längsrichtung des Funktionsteils (1) verfahrbarer Stempel (22, 23, 29) an die Stirnfläche (8) des Funktionsteils (1) angedrückt wird, während sich das Funktionsteil (1) zunächst zumindest über einen an sein freies Ende anschießenden Teilabschnitt seiner Längserstreckung in einem Hohlraum eines Werkzeuges (14, 28) befindet, welcher in radialer Richtung bezogen auf die Längsmittelachse (9) von einer die Mantelfläche (7) umgebenden und zumindest teilweise an der Mantelfläche (7) anliegenden Wandoberfläche (30) begrenzt wird, **dadurch gekennzeichnet, dass** im Weiteren das Werkzeug (14, 28) über einen Abziehweg vom Funktionsteil (1) über das freie Ende des Funktionsteils (1) abgezogen wird, während der Stempel (22, 23, 29) zumindest über einen Teilweg des Abziehweges des Werkzeuges (14, 28) vom Funktionsteil (1) an die Stirnfläche (8) des Funktionsteils (1) angepresst bleibt, wobei vom Werkzeug (14, 28) beim Abziehen des Werkzeuges (14, 28) vom Funktionsteil (1) ein Materialfluss von Material des Funktionsteils (1) bewirkt wird, wobei die axiale Erstreckung der Funktionskontur des Funktionsteils (1) vergrößert wird und/oder die Maßhaltigkeit der Funktionskontur des Funktionsteils (1) über ihre axiale Ausdehnung verbessert wird.

2. Verfahren nach Anspruch 1, **dadurch gekennzeichnet, dass** in einem vor dem Abziehen des Werkzeuges (14, 28) über den Abziehweg durchgeführten
Verfahrensschritt das Funktionsteil (1) in einem Matrizen (15, 16) aufweisenden Presswerkzeug (14) mittels mindestens eines Fließpressstempels (22, 23) fließgepresst wird.

3. Verfahren nach Anspruch 2, **dadurch gekennzeichnet, dass** das über den Abziehweg vom Funktionsteil (1) abgezogene Werkzeug das Presswerkzeug (14) ist und die den Hohlraum begrenzende Wandoberfläche (30) von mindestens einer der Matrizen (15, 16) des Presswerkzeuges (14) gebildet wird.

4. Verfahren nach Anspruch 3, **dadurch gekennzeichnet, dass** der zumindest über einen Teilweg des Abziehweges des Presswerkzeuges (14) an die Stirnfläche (8) des Funktionsteils (1) angepresste Stempel der bzw. einer der Fließpressstempel (22, 23) ist.

5. Verfahren nach Anspruch 3, **dadurch gekennzeichnet, dass** ein der zumindest über einen Teilweg des Abziehweges des Werkzeuges (14, 28) an die Stirnfläche (8) des Funktionsteils (1) angepresste Stempel ein zusätzlich zum mindes-tens einen Fließpressstempel (22, 23) vorhandener, in den Hohlraum des Presswerkzeuges (14) ragender Nachbearbeitungsstempel (29) ist.

6. Verfahren nach Anspruch 2, **dadurch gekennzeichnet, dass** das Funktionsteil (1) nach dem Fließpressen aus dem Presswerkzeug (14) herausgenommen und danach das Werkzeug (28), welches die den Hohlraum begrenzende Wandoberfläche (30) aufweist, in Längsrichtung des Funktionsteils (1) auf das Funktionsteil (1) aufgeschoben wird, und dass der an die Stirnfläche (8) des Funktionsteils (1) angepresste Stempel ein in den Hohlraum des Werkzeugs (28) ragender Nachbearbeitungsstempel (29) ist.

7. Verfahren nach Anspruch 6, **dadurch gekennzeichnet, dass** das Werkzeug (28) hülsenförmig ausgebildet ist.

8. Verfahren nach einem der Ansprüche 5 bis 7, **dadurch gekennzeichnet, dass** vor dem Abziehen des Werkzeuges (28) vom Funktionsteil (1) der Nachbearbeitungsstempel (29, 31) so stark an die Stirnfläche (8) Funktionsteils (1) angepresst wird, dass eine plastische Verformung Funktionsteils (1) mit einem Materialfluss von Material des Funktionsteils (1) bewirkt wird.

9. Verfahren nach einem der Ansprüche 5 bis 8, **dadurch gekennzeichnet, dass** der Nachbearbeitungsstempel (29, 31), zumindest nach dem Einschieben in den Hohlraum des Werkzeuges (14, 28), vom Werkzeug (14, 28) verschiebbar gelagert ist.

10. Verfahren nach einem der Ansprüche 1 bis 9, **dadurch gekennzeichnet, dass** das Funktionsteil (1) ein Stirnzahnrad oder ein Lagerzapfen, insbesondere eines Zapfenkreuzes, ist.

## Claims

1. Method for working a functional part (1), which extends in a longitudinal direction and has a lateral surface (7) that surrounds a longitudinal central axis (9) of the functional part (1) running in the longitudinal direction and has an end face (8) bounding the functional part (1) at a free end in the axial direction, a punch (22, 23, 29) that can be moved in the longitudinal direction of the functional part (1) being pressed against the end face (8) of the functional part (1), while the functional part (1) is initially located in a cavity of a tool (14, 28), at least over a partial portion of its longitudinal extent that adjoins its free end, which cavity is bounded in the radial direction with respect to the longitudinal central axis (9) by a wall surface (30) surrounding the lateral surface (7) and lying at least partially against the lateral surface (7), **characterized in that** furthermore the tool (14, 28) is pulled off from the functional part (1) over the free end of the functional part (1) over a pulling-off travel, while the punch (22, 23, 29) remains pressed against the end face (8) of the functional part (1), at least over a partial travel of the pulling-off travel of the tool (14, 28) from the functional part (1), a material flow of material of the functional part (1) being brought about by the tool (14, 28) during the pulling-off of the tool (14, 28) from the functional part (1), the axial extent of the functional contour of the functional part (1) being increased and/or the dimensional stability of the functional contour of the functional part (1) over its axial extent being improved.

2. Method according to Claim 1, **characterized in that**, in a method step carried out before the pulling-off of the tool (14, 28) over the pulling-off travel, the functional part (1) is cold-extruded by means of at least one cold-extrusion punch (22, 23) in an extrusion tool (14) which comprises dies (15, 16).

3. Method according to Claim 2, **characterized in that** the tool that is pulled off from the functional part (1) over the pulling-off travel is the extrusion tool (14), and the wall surface (30) bounding the cavity is formed by at least one of the dies (15, 16) of the extrusion tool (14).

4. Method according to Claim 3, **characterized in that** the punch that is pressed against the end face (8) of the functional part (1), at least over a partial travel of the pulling-off travel of the extrusion tool (14), is the or one of the cold-extrusion punch (es) (22, 23).

5. Method according to Claim 3, **characterized in that** a punch that is pressed against the end face (8) of the functional part (1), at least over a partial travel of the pulling-off travel of the tool (14, 28), is a re-working punch (29) that is provided in addition to the at least one cold-extrusion punch (22, 23) and protrudes into the cavity of the extrusion tool (14).

6. Method according to Claim 2, **characterized in that** the functional part (1) is removed from the extrusion tool (14) after the extrusion, and after that the tool (28), which has the wall surface (30) bounding the cavity, is pushed onto the functional part (1) in the longitudinal direction of the functional part (1), and **in that** the punch pressed against the end face (8) of the functional part (1) is a re-working punch (29) protruding into the cavity of the tool (28).

7. Method according to Claim 6, **characterized in that** the tool (28) takes the form of a sleeve.

8. Method according to one of Claims 5 to 7, **characterized in that** the re-working punch (29, 31) is pressed so strongly against the end face (8) of the functional part (1) before the tool (28) is pulled off from the functional part (1) that a plastic deformation of the functional part (1) is brought about, with a material flow of material of the functional part (1).

9. Method according to one of Claims 5 to 8, **characterized in that** the re-working punch (29, 31) is mounted in such a way that it can be displaced by the tool (14, 28), at least after the pushing into the cavity of the tool (14, 28).

10. Method according to one of Claims 1 to 9, **characterized in that** the functional part (1) is a spur gear wheel or a bearing journal, in particular of a journal cross.

## Revendications

1. Procédé d'usinage d'une pièce fonctionnelle (1) qui s'étend dans une direction longitudinale et présente une surface d'enveloppe (7) qui entoure un axe central longitudinal (9) de la pièce fonctionnelle (1) qui est placé dans la direction longitudinale et une face frontale (8) limitant la pièce fonctionnelle (1) à une extrémité libre dans la direction axiale, un poinçon (22, 23, 29) mobile dans la direction longitudinale de la pièce fonctionnelle (1) étant pressé sur la face frontale (8) de la pièce fonctionnelle (1) tandis que la pièce fonctionnelle (1) se trouve d'abord dans une cavité d'un outil (14, 28) au moins sur un tronçon partiel, adjacent à son extrémité libre, de son étendue longitudinale, la cavité étant, dans une direction radiale rapportée à l'axe central longitudinal (9), limitée par une surface de paroi (30) entourant la surface d'enveloppe (7) et au moins partiellement contiguë à la surface d'enveloppe (7), **caractérisé en ce que**, ensuite, l'outil (14, 28) est retiré de la pièce fonctionnelle (1) sur un trajet de retrait via l'extrémité libre de la pièce fonctionnelle (1) tandis que le poinçon (22, 23, 29) demeure pressé au moins sur un trajet partiel du trajet de retrait de l'outil (14, 28) à partir de la pièce fonctionnelle (1) sur la face frontale (8) de la pièce fonctionnelle (1), un flux de matériau du matériau de la pièce fonctionnelle (1) étant provoqué par l'outil (14, 28) lors du retrait de l'outil (14, 28) à partir de la pièce fonctionnelle (1), l'étendue axiale du contour fonctionnel de la pièce fonctionnelle (1) étant augmentée et/ou la stabilité dimensionnelle du contour fonctionnel sur son extension axiale étant améliorée.

2. Procédé selon la revendication 1, **caractérisé en ce que** dans une étape de procédé effectuée avant le retrait de l'outil (14, 28) sur le trajet de retrait, la pièce fonctionnelle (1) est extrudée dans un outil de pressage (14), présentant des matrices (15, 16), au moyen d'au moins un poinçon d'extrusion (22, 23).

3. Procédé selon la revendication 2, **caractérisé en ce que** l'outil retiré sur le trajet de retrait à partir de la pièce fonctionnelle (1) est l'outil de pressage (14), et la surface de paroi (30) limitant la cavité est formée par au moins une des matrices (15, 16) de l'outil de pressage (14).

4. Procédé selon la revendication 3, **caractérisé en ce que** le poinçon pressé sur la face frontale (8) de la pièce fonctionnelle (1) au moins sur un trajet partiel du trajet de retrait de l'outil de pressage (14) est le ou respectivement un des poinçons d'extrusion (22, 23).

5. Procédé selon la revendication 3, **caractérisé en ce qu'**un des poinçons pressés sur la face frontale (8) de la pièce fonctionnelle (1) au moins sur un trajet partiel du trajet de retrait de l'outil (14, 28) est un outil de ré-usinage (29) présent en plus du poinçon d'extrusion (22, 23) au moins au nombre de un et dépassant dans la cavité de l'outil de pressage (14).

6. Procédé selon la revendication 2, **caractérisé en ce que**, après l'extrusion, la pièce fonctionnelle (1) est extraite de l'outil de pressage (14), et puis l'outil (28) qui présente la surface de paroi (30) limitant la cavité est poussé dans la direction longitudinale de la pièce fonctionnelle (1) sur la pièce fonctionnelle (1), et **en ce que** le poinçon pressé sur la face frontale (8) de la pièce fonctionnelle (1) est un outil de ré-usinage (29) dépassant dans la cavité de l'outil (28).

7. Procédé selon la revendication 6, **caractérisé en ce que** l'outil (28) est constitué en forme de douille.

8. Procédé selon l'une des revendications 5 à 7, **caractérisé en ce que**, avant le retrait de l'outil (28) à partir de la pièce fonctionnelle (1), le poinçon de ré-usinage (29, 31) est pressé sur la face frontale (8) de la pièce fonctionnelle (1) avec une force telle qu'une déformation plastique de la pièce fonctionnelle (1) est provoquée avec un flux de matériau du matériau de la pièce fonctionnelle (1).

9. Procédé selon l'une des revendications 5 à 8, **caractérisé en ce que**, au moins après l'insertion dans la cavité de l'outil (14, 28), le poinçon de ré-usinage (29, 31) est supporté de façon à pouvoir être déplacé par l'outil (14, 28).

10. Procédé selon l'une des revendications 1 à 9, **caractérisé en ce que** la pièce fonctionnelle (1) est une roue dentée droite ou un tourillon, en particulier un croisillon de cardans.
